# EUROPEAN PATENT APPLICATION

(11) **EP 4 803 245 A1**
(43) Date of publication of application: **09.09.2026**
(21) Application number: 23957648.1
(22) Date of filing: 01.11.2023
(51) Int. Cl.: B23K 26/342

(54) **DATA GENERATION METHOD, COMPUTER PROGRAM, RECORDING MEDIUM, AND MACHINING DEVICE**

(71) Applicant: NIKON CORPORATION, Tokyo 140-8601 (JP)
(72) Inventor: KITA, Naonori, Tokyo 140-8601 (JP)
(74) Representative: Hoffmann Eitle
(86) International application number: PCT/JP2023/039473
(87) International publication number: WO 2025/094320

(57) **Abstract**

A data generation method includes: acquiring test processing condition information including a pulse number of the pulse energy beam, which should be irradiated onto each of a plurality of irradiation positions of a test workpiece to process the test workpiece so that its shape becomes a target shape; measuring a test workpiece shape that is a shape of the test workpiece after processing the test workpiece based on the test processing condition information; and calculating a target pulse number of the pulse energy beam, which should be irradiated onto a plurality of irradiation positions of the processing target workpiece, based on the test processing condition information, the test workpiece shape, and prediction information of a shape of a part that is processed by an irradiation of the pulse energy beam with a unit number of pulses.

## Description

### Technical Field

The present invention relates to a technical field of a data generation method, a computer program, a recording medium, and a processing apparatus that generate control data for controlling a processing apparatus, which is configured to perform a subtractive manufacturing on a processing target workpiece by irradiating a surface of the processing target workpiece with a pulse energy beam.

### Background Art

A Patent Literature 1 discloses a processing apparatus that is configured to process an object by irradiating the object with laser light. This type of processing apparatus is required to properly process the object.

### Citation List

### Patent Literature

Patent Literature 1: US2002/0017509A1

### Summary of Invention

A first aspect provides a data generation method that generates control data for controlling a processing apparatus, which is configured to perform a subtractive manufacturing on a processing target workpiece by irradiating a pulse energy beam onto a surface of the processing target workpiece, wherein the data generation method includes: acquiring test processing condition information including a pulse number of the pulse energy beam, which should be irradiated onto each of a plurality of irradiation positions of a test workpiece to process the test workpiece so that its shape becomes a target shape; measuring a test workpiece shape that is a shape of the test workpiece after processing the test workpiece based on the test processing condition information; and calculating a target pulse number of the pulse energy beam, which should be irradiated onto a plurality of irradiation positions of the processing target workpiece, based on the test processing condition information, the test workpiece shape, and prediction information of a shape of a part that is processed by an irradiation of the pulse energy beam with a unit number of pulses.

A second aspect provides a data generation method that generates control data for controlling a processing apparatus, which is configured to perform a subtractive manufacturing on a processing target workpiece by irradiating a pulse energy beam onto a surface of the processing target workpiece, wherein the data generation method includes: inputting test processing condition information indicating a pulse number of the pulse energy beam, which should be irradiated onto each of a plurality of irradiation positions of a test workpiece for processing the test workpiece so that its shape becomes a target shape; measuring a test workpiece shape related to a shape of the test workpiece, which has been processed by the pulse energy beam, based on the test processing condition information; performing a machine learning for generating model information, which includes prediction information of a shape processed by the pulse energy beam with a unit number of pulses, based on the test processing condition information and the test workpiece shape; and calculating a target pulse number of the pulse energy beam, which should be irradiated onto a plurality of irradiation positions of the processing target workpiece, based on the model information generated by the machine learning and the target shape.

A third aspect provides a data generation method that generates control data for controlling a processing apparatus, which is configured to perform a subtractive manufacturing on a processing target workpiece by irradiating a pulse energy beam onto a surface of the processing target workpiece, wherein the data generation method includes: acquiring model information that indicates a relationship between target pulse number information, which indicates a target pulse number of the pulse energy beam that should be irradiated onto a plurality of irradiation positions of the processing target workpiece, and target shape information, which is related to a target shape of the processing target workpiece after the subtractive manufacturing; and generating the target pulse number information as the control data based on the model information and the target shape information.

A fourth aspect provides a data generation method that generates control data for controlling a processing apparatus, which is configured to perform a subtractive manufacturing on a processing target workpiece by irradiating a pulse energy beam onto a surface of the processing target workpiece, wherein the data generation method includes: acquiring model information that is usable for predicting a predicted value of a processed amount at a first irradiation position and a predicted value of a processed amount at a position different from the first irradiation position, as a predicted value of a processed amount of the processing target workpiece in a case where the pulse energy beam is irradiated onto the first irradiation position of the plurality of irradiation positions for the unit number of pulses; and generating, as the control data, target pulse number information, which indicates a target pulse number of the pulse energy beam that should be irradiated onto the plurality of irradiation positions of the processing target workpiece, based on the model information and a target shape information that is related to a target shape of the processing target workpiece after the subtractive manufacturing.

A fifth aspect provides a data generation method that generates control data for controlling a processing apparatus, which is configured to perform a subtractive manufacturing on a processing target workpiece by irradiating a pulse energy beam onto a surface of the processing target workpiece, wherein the data generation method includes: acquiring test processing condition information for processing a test workpiece so that its shape becomes a target shape; measuring a test workpiece shape that is a shape of the test workpiece after processing the test workpiece based on the test processing condition information; and calculating a processing condition of the processing target workpiece based on the test processing condition information, the test workpiece shape, and prediction information of a shape processed by the pulse energy beam.

A sixth aspect provides a data generation method that generates control data for controlling a processing apparatus, which is configured to perform a subtractive manufacturing on a processing target workpiece by irradiating a pulse energy beam onto a surface of the processing target workpiece, wherein the data generation method includes: generating first test processing condition information indicating a pulse number of the pulse energy beam that should be irradiated onto each of a plurality of irradiation positions of a first test workpiece; acquiring first test shape information related to a shape of the first test workpiece on which the subtractive manufacturing has been performed by irradiating the pulse energy beam onto the first test workpiece based on the first test processing condition information; generating second test processing condition information indicating a pulse number of the pulse energy beam that should be irradiated onto each of a plurality of irradiation positions of a second test workpiece to process the second test workpiece so that its shape becomes a target shape; acquiring second test shape information related to a shape of the second test workpiece on which the subtractive manufacturing has been performed by irradiating the pulse energy beam onto the second test workpiece based on the second test processing condition information; and calculating a target pulse number of the pulse energy beam, which should be irradiated onto a plurality of irradiation positions of the processing target workpiece, based on the first test shape information, the second test shape information, the second test processing condition, and the target shape.

A seventh aspect provides a computer program that allows a computer to execute the data generation method provided by any one of the first and sixth to eighth aspect.

A eighth aspect provides a recording medium on which the computer program provided by the seventh aspect is recorded.

A ninth aspect provides a processing apparatus that performs a subtractive manufacturing on a processing target workpiece by using the control data generated by the data generation method provided by any one of the first and sixth to eighth aspect.

### Brief Description of Drawings

[FIG. 1] FIG. 1 is a block diagram that illustrates an entire configuration of a processing system in a present example embodiment.
[FIG. 2] FIG. 2 is a perspective view that schematically illustrates an exterior appearance of a processing apparatus in the present example embodiment.
[FIG. 3] FIG. 3 is a system configuration diagram that illustrates a system configuration of the processing apparatus in the present example embodiment.
[FIG. 4] FIG. 4 is a perspective view that illustrates a configuration of an irradiation optical system.
[FIG. 5] Each of FIG. 5(a) to FIG. 5(c) is a cross-sectional view that illustrates an aspect of a subtractive manufacturing performed on a workpiece.
[FIG. 6] FIG. 6 illustrates the workpiece before the subtractive manufacturing is performed thereon and the workpiece on which the subtractive manufacturing has been already performed.
[FIG. 7] FIG. 7 illustrates a removal target part that should be removed from the workpiece.
[FIG. 8] FIG. 8 is a cross-sectional view that illustrates a plurality of removal layers that should be removed from the workpiece.
[FIG. 9] Each of FIG. 9(a) to FIG. 9(d) is a plan view that illustrates an area in which the subtractive manufacturing is performed on a surface of the workpiece W in the process of removing each removal layer.
[FIG. 10] Each of FIG. 10(a) and FIG. 10(b) is a plan view that illustrates an irradiation target position on the surface of the workpiece.
[FIG. 11] FIG. 11 is a block diagram that illustrates a configuration of a data generation server.
[FIG. 12] FIG. 12 is a flowchart that illustrates a flow of a data generation operation.
[FIG. 13] FIG. 13(a) is a perspective view that illustrates one example of a riblet structure, and
FIG. 13(b) is a cross-sectional view that illustrates one example of the riblet structure.
[FIG. 14] FIG. 14 conceptionally illustrates an aspect of a machine learning for generating model information.
[FIG. 15] FIG. 15 conceptionally illustrates one example of the model information.
[FIG. 16] FIG. 16 conceptionally illustrates one example of prediction information.
[FIG. 17] FIG. 17 conceptionally illustrates an aspect of calculating a target pulse number based on the model information.

### Description of Example embodiments

Next, with reference to drawings, an example embodiment of a data generation method, a computer program, a recording medium, and a processing apparatus will be described. In the below described description, the example embodiment of the data generation method, the computer program, the recording medium, the processing apparatus will be described by using a processing system SYS that is configured to process a workpiece W by using processing light EL. However, the present invention is not limited to the below described embodiment.

Moreover, in the below described description, a positional relationship of various components that constitute the processing system SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. An XY plane may be a horizontal direction.

### (1) Entire Configuration of Processing System SYS

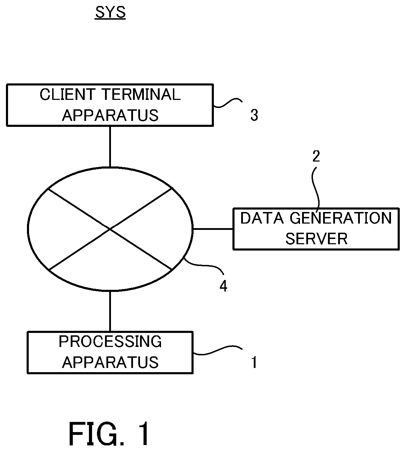

Firstly, with reference to FIG. 1, an entire configuration of the processing system SYS in the present example embodiment will be described. FIG. 1 is a block diagram that illustrates the entire configuration of the processing system SYS in the present example embodiment.

As illustrated in FIG. 1, the processing system SYS includes a processing apparatus 1 and a data generation server 2. Furthermore, the processing system SYS includes a client terminal apparatus 3. However, the processing system SYS may not include the client terminal apparatus 3. The processing apparatus 1, the data generation server 2, and the client terminal apparatus 3 are configured to communicate with one another through a communication network 4 that includes at least one of a wired communication network and a wireless communication network. In this case, the data generation server 2 may serve as a cloud server for the processing apparatus 1 and the client terminal apparatus 3. In a case where the data generation server 2 is configured to serve as the cloud server, the data generation server 2 may be referred to as a cloud server or a cloud system. However, at least one of the processing apparatus 1, the data generation server 2, and the client terminal apparatus 3 may not be configured to communicate with at least another one of the processing apparatus 1, the data generation server 2, and the client terminal apparatus 3.

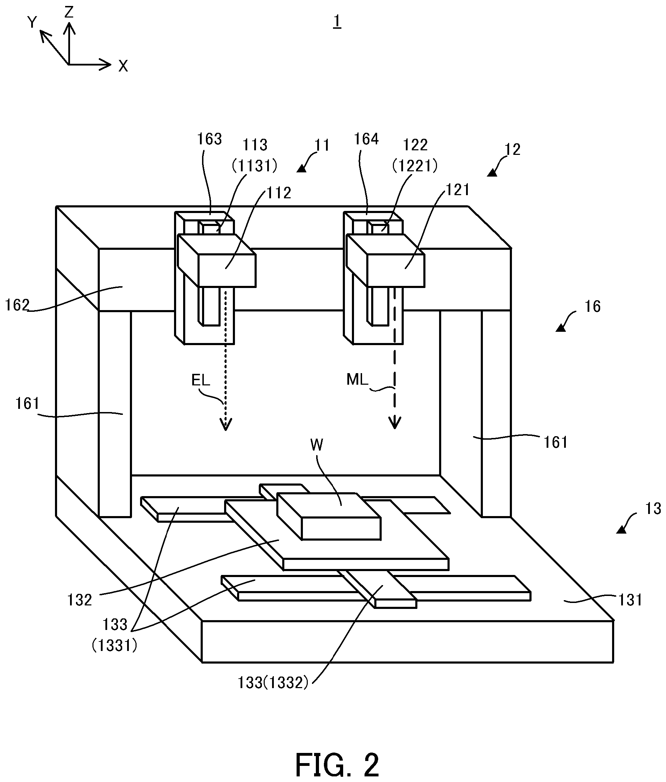

The processing apparatus 1 is configured to process the workpiece W (see FIG. 2) that is an object as a processing target (namely, a processing target object). Note that the workpiece W may be referred to as a processing target workpiece. The workpiece W may be a metal, may be an alloy (for example, a duralumin, and so on), may be a semiconductor (for example, a silicon), may be a resin, may be a composite material such as CFRP(Carbon Fiber Reinforced Plastic), may be a glass, may be a ceramic, or may be an object made of any other material, for example. At least one of a plaster, a rubber such as polyurethane, and an elastomer is one example of any material. Moreover, one part of the workpiece W may be made of one material and another part of the workpiece W may be made of another material.

In the present example embodiment, an example in which the processing apparatus 1 performs a subtractive manufacturing on the workpiece W will be described. Especially, in the present example embodiment, an example in which the processing apparatus 1 performs the subtractive manufacturing by irradiating the workpiece W with processing light EL will be described. However, the processing apparatus 1 may perform a processing that is different from the subtractive manufacturing on the workpiece W. For example, the processing apparatus 1 may perform an additive manufacturing on the workpiece W.

The processing apparatus 1 may perform the subtractive manufacturing to form a riblet structure on the workpiece W. The riblet structure may be a structure by which a resistance (especially, at least one of a frictional resistance and a turbulent frictional resistance) of the surface of the workpiece W to a fluid is reducible. The riblet structure may include a structure by which a noise, which is generated when the fluid and the surface of the workpiece W relatively move, is reducible. The riblet structure may include a structure in which a plurality of grooves, each of which extends along a first direction (for example, the Y-axis direction) that is along the surface of the workpiece W, are aligned along a second direction (for example, the X-axis direction) that is along the surface of the workpiece W and that intersects the first direction, for example.

The processing apparatus 1 may process the workpiece W to form any structure having any shape on the surface of the workpiece W. A structure that generates a swirl relative to a flow of the fluid on the surface of the workpiece W is one example of any structure. A structure for giving a hydrophobic property to the workpiece W is one example of any structure. A fine texture structure (typically, a concave and convex structure) that is formed regularly or irregularly in a micro / nano-meter order is another example of any structure. This fine texture structure may include at least one of a shark skin structure and a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improve an adhesion to a layer formed on the surface and so on.

The data generation server 2 is configured to generate control data for controlling the processing apparatus 1. The control data may be any data as long as it is usable to control the processing apparatus 1. For example, the control data may include data that directly or indirectly designates a processing condition of the processing apparatus 1. For example, the control data may include data that directly or indirectly designates a detail of an operation of the processing apparatus 1). For example, the control data may include data that may directly control the processing apparatus 1 (for example, command data and so on). For example, the control data may include data that is usable to generate data actually used to control the processing apparatus 1 (for example, slice data and so on described below).

In order to generate the control data, the data generation server 2 may acquire (namely, receive), from at least one of the processing apparatus 1 and the client terminal apparatus 3 through the communication network 4, information that is referred by the data generation server 2 to generate the control data (in the below-described description, it is referred to as "reference information"). The reference information may include information related to the processing light EL used by the processing apparatus 1 to process the workpiece W, for example. The information related to the processing light EL may include at least one of information related to an intensity of the processing light EL, information related to a shape of the processing light EL in a plane that intersects a propagating direction (in other words, a irradiation direction) of the processing light EL, information related to a light intensity distribution of the processing light EL in a plane intersecting the propagating direction of the processing light EL, information related to a fluence of the processing light EL, and information related to a fluence distribution of the processing light EL. The reference information may include apparatus identification information for identifying the processing apparatus 1, for example. The reference information may include workpiece identification information for identifying the workpiece W processed by the processing apparatus 1, for example. The reference information may include information related to a material of the workpiece W processed by the processing apparatus 1, for example. The information related to the material of the workpiece W may include information related to a type of material (for example, a type of metal material) of the workpiece W. The reference information may include information related to a shape of the workpiece W before the processing apparatus 1 performs the subtractive manufacturing thereon, for example. The reference information may include information related to a shape of the workpiece W on which the processing apparatus 1 has already performed the subtractive manufacturing, for example. Note that the shape of the workpiece W on which the processing apparatus 1 has already performed the subtractive manufacturing is referred to as a target shape (a goal shape) in the below-described description. The reference information may include information (processing quality information) related to a quality of the processing by the processing apparatus 1. The processing quality information may include at least one of information related to a resolution of the processing by the processing apparatus 1, information related to a surface roughness of the workpiece W processed by the processing apparatus 1, and information related to an accuracy of the processing by the processing apparatus 1. The reference information may include information (processing throughput information) related to a throughput of the processing by the processing apparatus 1.

The data generation server 2 may acquire all of the necessary reference information from the client terminal apparatus 3. The data generation server 2 may acquire all of necessary reference information from the processing apparatus 1. The data generation server 2 may acquire a part of the necessary reference information from the client terminal apparatus 3 and may acquire other part of the necessary reference information from the processing apparatus 1. The data generation server 2 may acquire the reference information from the processing apparatus 1 through the client terminal apparatus 3. The data generation server 2 may acquire the reference information from the client terminal apparatus 3 through the processing apparatus 1.

The data generation server 2 may be configured to store the acquired reference information. Note that both of the information related to the processing light EL and the identification information for identifying the processing apparatus 1 are information related to the processing apparatus 1. In this case, the data generation server 2 may be configured to store the information related to the processing light EL and the identification information in a state in which the information related to the processing light EL and the identification information are associated with each other. Alternatively, a server (for example, a cloud server) different from the data generation server 2 may acquire the reference information from at least one of the processing apparatus 1 and the client terminal apparatus 3 through the communication network 4 and store the acquired reference information. In this case, the data generation server 2 may acquire the reference information from the cloud server that stores the reference information.

The data generation server 2 may generate the control data based on the acquired reference information. For example, the data generation server 2 may generate the control data by performing a calculation based on the acquired reference information. As one example, the data generation server 2 may determine the processing condition by performing the calculation based on the acquired reference information, and generate the control data for controlling the processing apparatus 1 so that the processing apparatus 1 operates in accordance with the determined processing conditions. A deconvolution calculation is one example of the calculation. Alternatively, for example, in a case where a plurality of candidates for the control data are prepared in advance, the data generation server 2 may select one control data based on the acquired reference information. As one example, the data generation server 2 may select one processing condition from a plurality of candidates for the processing condition prepared in advance based on the acquired reference information, and select (generate) the control data for controlling the processing apparatus 1 so that the processing apparatus 1 operates in accordance with the selected processing condition. Namely, in the present example embodiment, an operation for generating the control data may include at least one of an operation for newly generating the control data by the calculation and an operation for selecting control data prepared in advance. Note that the processing condition may be referred to as a processing recipe.

The data generation server 2 may be installed at a location at which the processing apparatus 1 is installed. The data generation server 2 may be installed at a location that is different from the location at which the processing apparatus 1 is installed. The data generation server 2 may be installed at a location at which the client terminal apparatus 3 is installed. The data generation server 2 may be installed at a location that is different from the location at which the client terminal apparatus 3 is installed. As one example, the data generation server 2 may be installed at a business location that is different from a business location at which at least one of the processing apparatus 1 and the client terminal apparatus 3 is installed. As another example, the data generation server 2 may be installed in a country that is different from a country in which at least one of the processing apparatus 1 and the client terminal apparatus 3 is installed.

The client terminal apparatus 3 is a terminal apparatus that is usable by a user of the processing apparatus 1. The client terminal apparatus 3 may include at least one of a personal computer, a smart phone, and a tablet terminal, for example.

### (2) Processing Apparatus 1

Next, the processing apparatus 1 of the processing system SYS will be described.

### (2-1) Configuration of Processing Apparatus 1

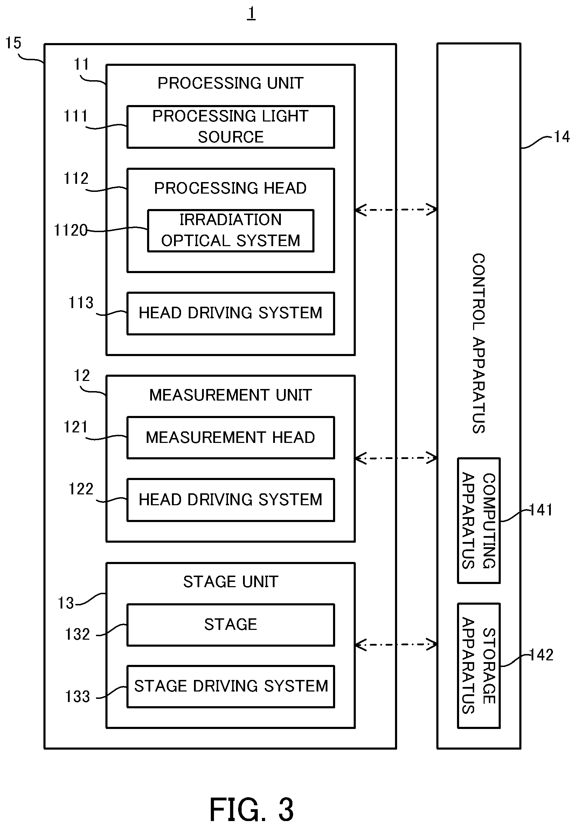

Firstly, with reference to FIG. 2 and FIG. 3, a configuration of the processing apparatus 1 will be described. FIG. 2 is a perspective view that illustrates an exterior appearance of the processing apparatus 1. FIG. 3 is a system configuration diagram that illustrates a system configuration of the processing apparatus 1.

As illustrated in FIG. 2 and FIG. 3, the processing apparatus 1 includes a processing unit 11, a measurement unit 12, a stage unit 13, and a control unit 14. Note that the processing unit 11, the measurement unit 12, the stage unit 13, and the control unit 14 may be referred to as processing apparatus, a measurement apparatus, a stage apparatus, and a control apparatus, respectively. The processing unit 11, the measurement unit 12 and the stage unit 13 are contained in a housing 15. However, the processing unit 11, the measurement unit 12 and the stage unit 13 may not be contained in the housing 15. The processing apparatus 1 may not include the housing 15 in which the processing unit 11, the measurement unit 12 and the stage unit 13 are contained.

The processing unit 11 is configured to perform the subtractive manufacturing on the workpiece W by irradiating the workpiece W with the processing light EL under the control of the control unit 14. In order to perform the subtractive manufacturing on the workpiece W, the processing unit 11 includes a processing light source 111, a processing head 112, and a head driving system 113.

The processing light source 111 is configured to emit, as the processing light EL, at least one of infrared light, visible light, ultraviolet light and Extreme ultraviolet light under the control of the control unit 14, for example. However, another type of light may be used as the processing light EL.

The processing light EL may include pulsed light (namely, a plurality of pulsed beams). Note that the pulsed light may be referred to as a pulsed energy beam, because the light is one example of an energy beam. In this case, the processing light source 111 may emit, as the processing light EL, the pulsed light whose pulse width is on an order of femtoseconds, picoseconds, or nanoseconds. However, the processing light EL may not include the pulsed light. For example, the processing light EL may be continuous light.

The processing light EL may be a laser light. In this case, the processing light source 111 may include a laser light source (for example, a semiconductor laser such as a Laser Diode (LD)). The laser light source may include at least one of a fiber laser, a CO₂ laser, a YAG laser, an Excimer laser and the like. However, the processing light EL may not be the laser light. The processing light source 111 may include any light source (for example, at least one of a LED (Light Emitting Diode), a discharge lamp and the like).

The processing head 112 processes the workpiece W by irradiating the workpiece W with the processing light EL emitted from the processing light source 111 under the control of the control unit 14. The processing head 112 performs the subtractive manufacturing on the workpiece W placed on a below-described stage 132. Namely, the subtractive manufacturing is performed on the stage 132. In this case, the processing head 112 may be disposed above the stage 132 on which the workpiece W is placed. For example, the processing head 112 may be attached to a gate-shaped support frame 16 disposed on a surface plate 131 of the stage unit 13. The support frame 16 may include a pair of leg members 161 projecting along the Z-axis direction from the surface plate 131 and a beam member 162 connecting the pair of leg members 161 through upper ends of the leg members 161. The beam member 162 may be disposed above the stage 132. The processing head 112 may be attached to the beam member 162. Incidentally, in an example illustrated in FIG. 2, the processing head 112 is attached to the beam member 162 through the below-described head driving system 113. In a case where the processing head 112 is disposed above the stage 132, the processing head 112 may irradiate the workpiece W with the processing light EL by emitting the processing light EL downwardly from the processing head 112. Namely, the processing head 112 may irradiate the workpiece W with the processing light EL propagating along the Z-axis direction by emitting the processing light EL propagating along the Z-axis direction.

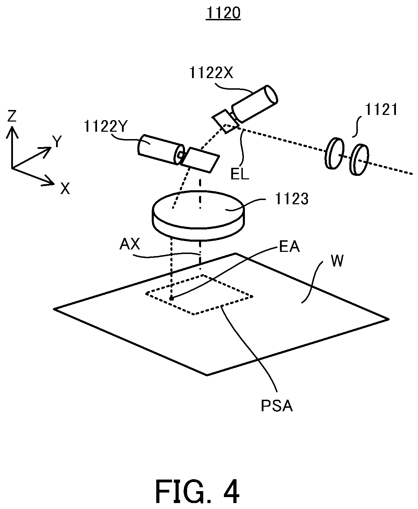

In order to irradiate the workpiece W with the processing light EL, the processing head 112 includes an irradiation optical system 1120. Here, with reference to FIG. 4, the irradiation optical system 1120 will be described. FIG. 4 is a perspective view that illustrates a configuration of the irradiation optical system 1120.

As illustrated in FIG. 4, the irradiation optical system 1120 may include a focus changing optical system 1121, a Galvano mirror 1122, and an fθ lens 1123, for example.

The focus changing optical system 1121 is an optical component that is configured to change a light concentration position of the processing light EL (namely, a converged position of the processing light EL) along the propagating direction of the processing light EL. The focus changing optical system 1121 may include a plurality of lenses aligned along the propagating direction of the processing light EL, for example. In this case, the light concentration position of the processing light EL may be changed by moving at least one of the plurality of lenses along its optical axis direction.

The processing light EL that has passed through the focus changing optical system 1121 enters the Galvano mirror 1122. The Galvano mirror 1122 changes an emission direction of the processing light EL from the Galvano mirror 1122 by deflecting the processing light EL (namely, changing an emission angle of the processing light EL). When the emission direction of the processing light EL from the Galvano mirror 1122 is changed, a position from which the processing light EL is emitted from the processing head 112 is changed. When the position from which the processing light EL is emitted from the processing head 112 is changed, a position of a target irradiation area EA that is irradiated with the processing light EL on the surface of the workpiece W is changed.

The Galvano mirror 1122 includes a X scanning mirror 1122X and a Y scanning mirror 1122Y, for example. Each of the X scanning mirror 1122X and the Y scanning mirror 1122Y is a tilt angle variable mirror an angle of which is variable relative to an optical path of the processing light EL entering each mirror. The X scanning mirror 1122X reflects the processing light EL to the Y scanning mirror 1122Y. The X scanning mirror 1122X is configured to swing or rotate around a rotational axis along the Y axis direction. Due to the swing or the rotation of the X scanning mirror 1122X, the surface of the workpiece W is scanned with the processing light EL along the X axis direction. Due to the swing or the rotation of the X scanning mirror 1122X, the target irradiation area EA moves on the surface of the workpiece W along the X axis direction. The Y scanning mirror 1122Y reflects the processing light EL to the fθ lens 1123. The Y scanning mirror 1122Y is configured to swing or rotate around a rotational axis along the X axis. Due to the swing or the rotation of the Y scanning mirror 1122Y, the surface of the workpiece W is scanned with the processing light EL along the Y axis direction. Due to the swing or the rotation of the Y scanning mirror 1122X, the target irradiation area EA moves on the surface of the workpiece W along the Y axis direction.

The Galvano mirror 1122 allows a processing area PSA defined with respect to the processing head 112 to be scanned with the processing light EL. Namely, the Galvano mirror 1122 allows the target irradiation area EA to move in the processing area PSA defined with respect to the processing head 112. Note that the processing area PSA indicates an area (in other words, a range) in which the subtractive manufacturing is performed by the processing head 112 in a state in which a positional relationship between the processing head 112 and the workpiece W is fixed (namely, is not changed). Typically, the processing area PSA is set to be an area that is same as or narrower than a scanning range of the processing light EL that is deflected by the Galvano mirror 1122 in a state in which the positional relationship between the processing head 112 and the workpiece W is fixed. Furthermore, the processing area PSA (the target irradiation area EA) is movable relative on the surface of the workpiece W by the below-described head driving system 113 moving the processing head 112 and or a below-described stage driving system 133 moving the stage 132.

Incidentally, depending on a height of the surface of the workpiece W, the processing head 112 may be moved in the Z-axis direction (in a direction intersecting the surface of the workpiece W) by the head driving system 113, the stage 132 may be moved in the Z-axis direction by the stage driving system 133, and the light concentration position may be changed by using the focus changing optical system 1121. At least two methods of these three methods may be used together.

The fθ lens 1123 is an optical system for emitting the processing light EL from the Galvano mirror 1122 toward the workpiece W. Especially, the fθ lens 1123 is an optical element that is configured to condense the processing light EL from the Galvano mirror 1122 on a condensing plane. Therefore, the fθ lens 1123 may be referred to as a condensing optical system or an objective optical system. The condensing plane of the fθ lens 1123 may be set on the surface of the workpiece W, for example. The condensing plane of the fθ lens 1123 may be set on a plane that is away from the surface of the workpiece W along a direction along an optical axis AX of the fθ lens 1123. Note that the condensing plane of the fθ lens 1123 may be set on a plane including a rear focal point position of the fθ lens 1123. In this case, the Galvano mirror 1122 may be disposed at a front focal point position of the fθ lens 1123. In a case where the Galvano mirror 1122 includes the plurality of scanning mirrors (for example, the X scanning mirror 1122X and the Y scanning mirror 1122Y), the front focal point position of the fθ lens 1123 may be set between the plurality of scanning mirrors.

Again in FIG. 2 and FIG. 3, the head driving system 113 moves the processing head 112 (especially, the irradiation optical system 1120) along at least one of the X-axis direction, the Y-axis direction, the Z-axis direction, the θX direction, the θY direction, and the θZ direction under control of the control unit 14. Therefore, the head driving system 113 may be referred to as a movement apparatus. FIG. 2 illustrates an example in which the head driving system 113 moves the processing head 112 along the Z-axis direction. In this case, the head driving system 113 may include a Z slide member 1131 extending along the Z-axis direction, for example. The Z slide member 1131 is disposed at the support frame 16 that is disposed on the surface plate 131 through a vibration isolator. The Z slide member 1131 is disposed at the beam member 162 through a support member 163 that extends along the Z-axis direction, for example. The processing head 112 is connected to the Z slide member 1131 so as to be movable along the Z slide member 1131.

When the processing head 112 moves, a positional relationship between the processing head 112 and the below-described stage 132 changes. Furthermore, when the processing head 112 moves, a positional relationship between the processing head 112 and the workpiece W placed on the stage 132 changes. Therefore, moving the processing head 112 may be considered to be equivalent to changing the positional relationship between the processing head 112 and each of the stage 132 and the workpiece W. Moreover, when the processing head 112 moves, the target irradiation area EA and the processing area PSA, which are irradiated with the processing light EL on the surface of the workpiece W, move relative to the surface of the workpiece W.

The measurement unit 12 is configured to measure a measurement target object under the control of the control unit 14. In order to measure the measurement target object, the measurement unit 12 includes a measurement head 121 and a head driving system 122.

The measurement head 121 is capable of measuring (in other words, is capable of measuring) the measurement target object under the control of the control unit 14. Specifically, the measurement head 121 is configured to measure any characteristic of the measurement target object. A position of the measurement target object is one example of the characteristic of the measurement target object. A shape (for example, a two-dimensional shape or a three-dimensional shape) of the measurement target object is another example of the characteristic of the measurement target object. At least one of a reflectance of the measurement target object, a transmittance of the measurement target object, and a surface roughness of the measurement target object is another example of the characteristic of the measurement target object.

The measurement target object may include the workpiece W. Specifically, the measurement target object may include at least one of the workpiece W before the processing unit 11 performs the subtractive manufacturing thereon, the workpiece W that is in the process of the subtractive manufacturing performed by the processing unit 11, and the workpiece W on which the processing unit 11 has already performed the subtractive manufacturing. The measuring object may include the stage 132 on which the workpiece W may be placed.

The measurement head 121 may measure the measurement target object by using any measurement method. For example, the measurement head 121 may measure the measurement target object optically, electrically, magnetically, physically, chemically or thermally. The measurement head 121 may measure the measurement target object without contacting the measurement target object. The measurement head 121 may measure the measurement target object by contacting the measurement target object. In the present example embodiment, an example in which the measurement head 121 optically measures the measurement target object by irradiating the measurement target object with measurement light ML without contacting the measurement target object. For example, the measurement head 121 may measure the measurement target object by using a light section method that projects the measurement light ML, which is a slit light, on the surface of the measurement target object and measures a shape of the projected slit light. For example, the measurement head 121 may measure the measurement target object by using a white light interference method that measures an interference pattern of the measurement light ML, which is a white light through the measurement target object, and a white light not through the measurement target object. For example, the measurement head 121 measure the measurement target object by using a pattern projection method that projects the measurement light ML, which forms a light pattern on the surface of the measurement target object, and measures a shape of the projected pattern. For example, the measurement head 121 measure the measurement target object by using a time of flight method that performs an operation, which emits the measurement light ML to the surface of the measurement target object and measures a distance to the measurement target object based on an elapsed time until the emitted light returns, at plurality of positions on the measurement target object. For example, the measurement head 121 measure the measurement target object by using at least one of a moiré topography method ( specifically, a grid irradiation method or a grid projection method), a holography interference method, an auto collimation method, a stereo method, an astigmatism method, a critical angle method, a knife edge method, an interference measurement method and a confocal method.

The measurement head 121 may be disposed above the stage 132 on which the workpiece W is placed. Specifically, the measurement head 121 may be attached to the beam member 162 in the same manner as the processing head 112. In the example illustrated in FIG. 2, the measurement head 121 is attached to the beam member 162 through the head driving system 122. In a case where the measurement head 121 is disposed above the stage 132, the measurement head 121 may measure the workpiece W above the workpiece W. The measurement head 121 may measure the stage 132 above the stage 132. In a case where the measurement head 121 is disposed above the stage 132, the measurement head 121 may irradiate at least one of the workpiece W and the stage 132 with the measurement light ML by emitting the measurement light ML downwardly from the measurement head 121. Namely, the measurement head 121 may irradiate at least one of the workpiece W and the stage 132 with the measurement light ML propagating along the Z-axis direction by emitting the measurement light ML propagating along the Z-axis direction.

Note that the measurement head 121 may include a plurality of measurement devices, each of which is configured to measure the measurement target object. The plurality of measurement devices may include at least two measurement devices whose measurement resolutions are different from each other (in other words, whose measurement accuracies are different from each other). The plurality of measurement devices may include at least two measurement devices whose sizes of measurement areas are different from each other.

The head driving system 122 moves the measurement head 121 along at least one of the X-axis direction, the Y-axis direction, the Z-axis direction, the θX direction, the θY direction, and the θZ direction under the control of the control unit 14. Therefore, the head driving system 122 may be referred to as a movement apparatus. FIG. 2 illustrates an example in which the head driving system 122 moves the measurement head 121 along the Z-axis direction. In this case, the head driving system 122 may include a Z slide member 1221 extending along the Z-axis direction, for example. The Z slide member 1221 is disposed at the support frame 16 that is disposed on the surface plate 131 through the vibration isolator. The Z slide member 1221 is disposed at the beam member 162 through a support member 164 that extends along the Z-axis direction, for example. The measurement head 121 is connected to the Z slide member 1221 so as to be movable along the Z slide member 1221.

When the measurement head 121 moves, a positional relationship between the measurement head 121 and the below-described stage 132 changes. Furthermore, when the measurement head 121 moves, a positional relationship between the measurement head 121 and the workpiece W placed on the stage 132 changes. Therefore, moving the measurement head 121 may be considered to be equivalent to changing the positional relationship between the measurement head 121 and each of the stage 132 and the workpiece W.

The stage unit 13 includes the surface plate 131, the stage 132, and the stage driving system 133.

The surface plate 131 is disposed on a bottom surface of the housing 15 (alternatively, a support surface such as a floor surface on which the housing 15 is placed). The stage 132 is placed on the surface plate 131. The non-illustrated vibration isolator that reduces a transmission of vibration from the surface plate 131 to the stage 132 may be disposed between the surface plate 131 and the bottom surface of the housing 15 or the support surface such as the floor surface on which the housing 15 is placed. Moreover, the above-described support frame 16 may be disposed on the surface plate 131. Note that a leg member may be provided between the surface plate 131 and the bottom surface of the housing 15 (alternatively, the support surface such as the floor surface on which the housing 15 is placed). In this case, a vibration isolator may be disposed between the leg member and the surface plate 131 and / or between the leg members and the bottom surface (alternatively, the support surface).

The stage 132 is a placing apparatus on which the workpiece W is placed. The stage 132 may be configured to hold the workpiece W placed on the stage 132. Alternatively, the stage 132 may not be configured to hold the workpiece W placed on the stage 132. In this case, the workpiece W may be placed on the stage 132 without a clamp. In a case where the stage 132 is configured to hold the workpiece W, the stage 132 may include at least one of a mechanical chuck, an electrostatic chuck and a vacuum suction chuck to hold the workpiece W.

The stage driving system 133 moves the stage 132 under the control of the control unit 14. For example, the stage driving system 133 may move the stage 132 along at least one of the X-axis direction, the Y-axis direction, the Z-axis direction, the θX direction, the θY direction, and the θZ direction under the control of the control unit 14. Note that the stage driving system 133 may be referred to as a movement apparatus.

In the example illustrated in FIG. 2, the stage driving system 133 moves the stage 132 along each of the X-axis and the Y-axis. Namely, in the example illustrated in FIG. 2, the stage driving system 133 moves the stage 132 along a direction that is along the XY plane intersecting the propagating direction of each of the processing light EL and the measurement light ML. In this case, the stage driving system 133 may include an X slide member 1331 extending along the X-axis direction (in the example illustrated in FIG. 2, two X slide members 1331 disposed to be parallel to each other) and a Y slide member 1332 extending along the Y-axis direction (in the example illustrated in FIG. 2, one Y slide member 1332), for example. The two X slide members 1331 are disposed on the surface plate 131 so as to be aligned along the Y-axis direction. The Y slide member 1332 is connected to the two X slide members 1331 so as to be movable along the two X slide members 1331. The stage 132 is connected to the Y slide member 1332 so as to be movable along the Y slide member 1332. Note that there are the plurality of X slide members 1331 in the example illustrated in FIG. 2, however, there may be only one X slide member 1331. Moreover, the stage 132 may be supported to float on the surface plate 131 by an air bearing.

When the stage driving system 133 moves the stage 132, the positional relationship between each of the processing head 112 and measurement head 121 and each of the stage 132 and the workpiece W changes. Therefore, the stage driving system 133 may be considered to be configured to serve as a position change apparatus configured to change the positional relationship between each of the processing head 112 and the measurement head 121 and each of the stage 132 and the workpiece W. Furthermore, when the stage driving system 133 moves the stage 132, each of the stage 132 and the workpiece W moves relative to each of the processing area PSA in which the processing head 112 performs the subtractive manufacturing and the measurement area in which the measurement head 121 performs the measurement.

The control unit 14 controls the operation of the processing apparatus 1. For example, the control unit 14 may generate processing control information (for example, processing path information) for processing the workpiece W, and control the processing unit 11 and the stage unit 13 based on the processing control information so that the workpiece W is processed in accordance with the generated processing control information. Namely, the control unit 14 may control the processing of the workpiece W. For example, the control unit 14 may generate measurement control information for measuring the measurement target object, and control the processing unit 11 and the stage unit 13 based on the measurement control information so that the measurement target object is measured in accordance with the generated measurement control information. Namely, the control unit 14 may control the measurement of the measurement target object.

The control unit 14 may generate at least one of the processing control information and the measurement control information based on the control data generated by the data generation server 2. In this case, the control unit 14 may acquire the control data from the data generation server 2 through the communication network 4. Alternatively, the control unit 14 may acquire the control data from the client terminal apparatus 3 that has acquired the control data from the data generation server 2 through the communication network 4.

The control unit 14 may include a computing apparatus 141 and a storage apparatus 142. The computing apparatus 141 may include at least one of a CPU (Central Processing Unit) and a GPU (Graphic Processing Unit), for example. The control unit 14 serves as an apparatus for controlling the operation of the processing apparatus by means of the computing apparatus 141 executing a computer program. The computer program is a computer program that allows the control unit 14 (for example, the computing apparatus 141) to execute (namely, to perform) a below-described operation that should be executed by the control unit 14. Namely, the computer program is a computer program that allows the control unit 14 to function so as to make the processing apparatus 1 perform the below-described operation. The computer program executed by the computing apparatus 141 may be recorded in the storage apparatus 142 (namely, a recording medium) of the control unit 14, or may be recorded in any recording medium (for example, a hard disk or a semiconductor memory) that is built in the control unit 14 or that is attachable to the control unit 14. Alternatively, the computing apparatus 141 may download the computer program that should be executed from an apparatus disposed at the outside of the control unit 14 through a network interface.

The control unit 14 may not be disposed in the processing apparatus 1. For example, the control unit 14 may be disposed at the outside of the processing apparatus 1 as a server or the like. For example, the control unit 14 may be disposed as a computer (for example, a laptop computer) that is connectable to the processing apparatus 1. For example, the control unit 14 may be disposed as a computer (for example, a laptop computer) that is disposed in the vicinity of the processing apparatus 1. In this case, the control unit 14 may be connected to the processing apparatus 1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 14 and the processing apparatus 1 may be configured to transmit and receive various information through the network. Moreover, the control unit 14 may be configured to transmit information such as a command and a control parameter to the processing apparatus 1 through the network. The processing apparatus 1 may include a reception apparatus that is configured to receive the information such as the command and the control parameter from the control unit 14 through the network. Alternatively, a first control apparatus that is configured to perform a part of the processing performed by the control unit 14 may be disposed in the processing apparatus 1 and a second control apparatus that is configured to perform another part of the processing performed by the control unit 14 may be disposed at an outside of the processing apparatus 1.

The control unit 14 may be configured to serve as the client terminal apparatus 3. For example, a certain computer may be used as the control unit 14 and may be used as the client terminal apparatus 3. Namely, the control unit 14 and the client terminal apparatus 3 may be an integrated apparatus (alternatively, an integrated system). However, typically, two different computers may be used as the control unit 14 and the client terminal apparatus 3, respectively.

An arithmetic model that is buildable by machine learning may be implemented in the control unit 14 by the computing apparatus 141 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 14 may control the operation of the processing apparatus 1 by using the arithmetic model. Namely, the operation for controlling the operation of the processing apparatus 1 may include an operation for controlling the operation of the processing apparatus 1 by using the arithmetic model. Note that the arithmetic model that has been built by off-line machine learning using training data may be implemented in the control unit 14. Moreover, the arithmetic model implemented in the control unit 14 may be updated by online machine learning on the control unit 14. Alternatively, the control unit 14 may control the operation of the processing apparatus 1 by using the arithmetic model implemented in an apparatus external to the control unit 14 (namely, an apparatus external to the processing apparatus 1), in addition to or instead of the arithmetic model implemented on the control unit 14.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the computing apparatus 141. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control unit 14 by means of the control unit 14 (namely, a computer) executing the computer program, may be realized by a hardware such as a predetermined gate array (a FPGA, an ASIC) of the control unit 14, or may be realized in a form in which the logical process block and a partial hardware module that realizes an partial element of the hardware are combined.

### (2-2) Subtractive manufacturing performed by Processing Apparatus 1

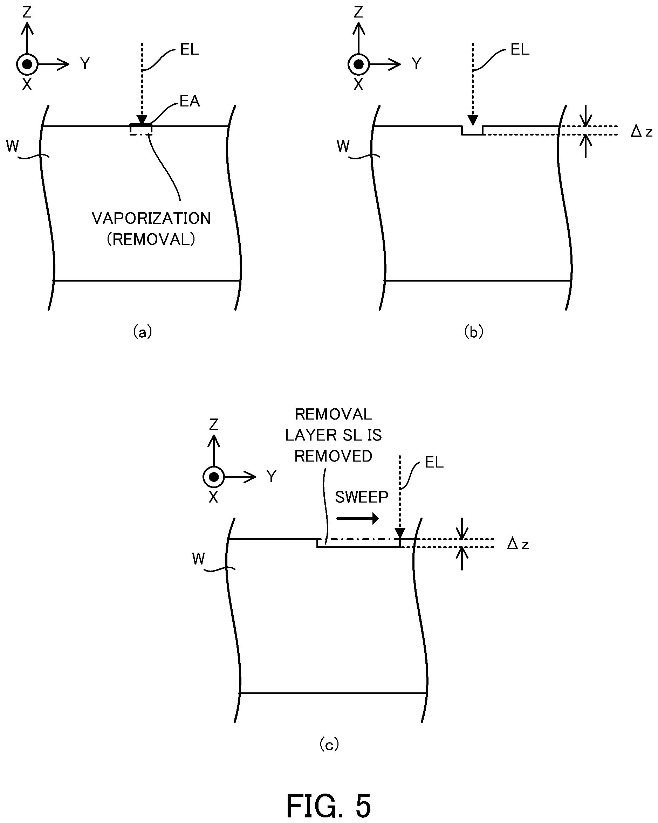

Next, with reference to FIG. 5(a) to FIG. 5(c), one example of the subtractive manufacturing using the processing light EL will be described. Each of FIG. 5(a) to FIG. 5(c) is a cross-sectional view that illustrates an aspect of the subtractive manufacturing performed on the workpiece W.

As illustrated in FIG. 5(a), the processing apparatus 1 irradiates the target irradiation area EA set (in other words, formed) on the surface of the workpiece W with the processing light EL. When the target irradiation area EA is irradiated with the processing light EL, an energy of the processing light EL is transmitted to the target irradiation area EA and a part that is in vicinity of the target irradiation area EA of the workpiece W. When a heat caused by the energy of the processing light EL is transmitted, a material constituting the target irradiation area EA and a part that is in vicinity of the target irradiation area EA of the workpiece W is melted due to the heat caused by the energy of the processing light EL. The melted material spatters as liquid drop. Alternatively, the melted material evaporates due to the heat caused by the energy of the processing light EL. As a result, the target irradiation area EA and a part that is in vicinity of the target irradiation area EA of the workpiece W is removed. Namely, as illustrated in FIG. 5(b), a concave part (in other words, a groove part), whose depth corresponds to a standard processed amount Δz due to the processing light EL, is formed at the surface of the workpiece W. Here, the standard processed amount Δz may be a depth by which the workpiece W is removed by irradiating the workpiece W with the processing light for a unit number of pulses in a case where the processing light EL is the pulsed light. Here, the unit number of pulses may be one or a number that is more than one. Moreover, since the standard processed amount Δz is an amount processed by the irradiation of the processing light EL for the unit number of pulses, this may be referred to as a unit processed amount. In this case, it can be said that the processing apparatus 1 performs the subtractive manufacturing on the workpiece W by using a principle of what we call a thermal processing. Incidentally, in a case where the thermal processing is performed, the processing light EL may include the pulsed light an ON time of which is equal to or longer than milli-seconds or the continuous light. Incidentally, in a case where the processing light EL is the continuous light, the standard processed amount Δz may be a processed amount (a removed depth) of the workpiece W by irradiating the workpiece W with the processing light EL having a unit energy for a unit time.

On the other hand, the processing apparatus 1 may process the workpiece W by using a principle of non-thermal processing (for example, an ablation processing) depending on a characteristic of the processing light EL. Namely, the processing apparatus 1 may perform the non-thermal processing (for example, the ablation processing) on the workpiece W. For example, in a case where the light whose photon density (in other words, fluence) is high is used as the processing light EL, the material constituting the target irradiation area EA and a part that is in vicinity of the target irradiation area EA of the workpiece W instantly evaporates and spatters. Namely, the material constituting the target irradiation area EA and a part that is in vicinity of the target irradiation area EA of the workpiece W evaporates and spatters within a time sufficiently shorter than a thermal diffusion time of the workpiece W. In this case, the material constituting the target irradiation area EA and a part that is in vicinity of the target irradiation area EA of the workpiece W may be released from the workpiece W as at least one of ion, atom, radical, molecule, cluster and solid piece. Incidentally in a case where the non-thermal processing is performed, the processing light EL may include the pulsed light the ON time of which is equal to or shorter than pico-seconds (alternatively, is equal to or shorter than nano-seconds or femtoseconds, in some case). In a case where the pulsed light the ON time of which is equal to or shorter than pico-seconds (alternatively, is equal to or shorter than nano-seconds or femtoseconds, in some case) is used as the processing light EL, the material constituting the target irradiation area EA and a part that is in vicinity of the target irradiation area EA of the workpiece W may sublimate without going through a molten state. Therefore, it is possible to process the workpiece W while reducing an effect of the heat caused by the energy of the processing light EL on the workpiece W as much as possible.

The processing apparatus 1 moves the target irradiation area EA on the surface of the workpiece W by using the above-described Galvano mirror 1122. Namely, the processing apparatus 1 scans the surface of the workpiece W with the processing light EL. As a result, as illustrated in FIG. 5(c), the surface of the workpiece W is removed at least partially along a scanning trajectory of the processing light EL (namely, a movement trajectory of the target irradiation area EA). Therefore, the processing apparatus 1 may appropriately remove a part of the workpiece W on which the subtractive manufacturing should be performed by scanning the surface of the workpiece W with the processing light EL along a desired scanning trajectory corresponding to an area on which the subtractive manufacturing should be performed. The processing apparatus 1 may appropriately remove the part of the workpiece W on which the subtractive manufacturing should be performed by scanning the surface of the workpiece W with the processing light EL along the desired scanning trajectory corresponding to the area on which the subtractive manufacturing should be performed. The processing apparatus 1 may appropriately remove a removal layer SL, which has a thickness corresponding to the standard processed amount Δz and is the part on which the subtractive manufacturing should be performed, from the workpiece W by scanning the surface of the workpiece W with the processing light EL along a desired scanning trajectory corresponding to the area on which the subtractive manufacturing should be performed.

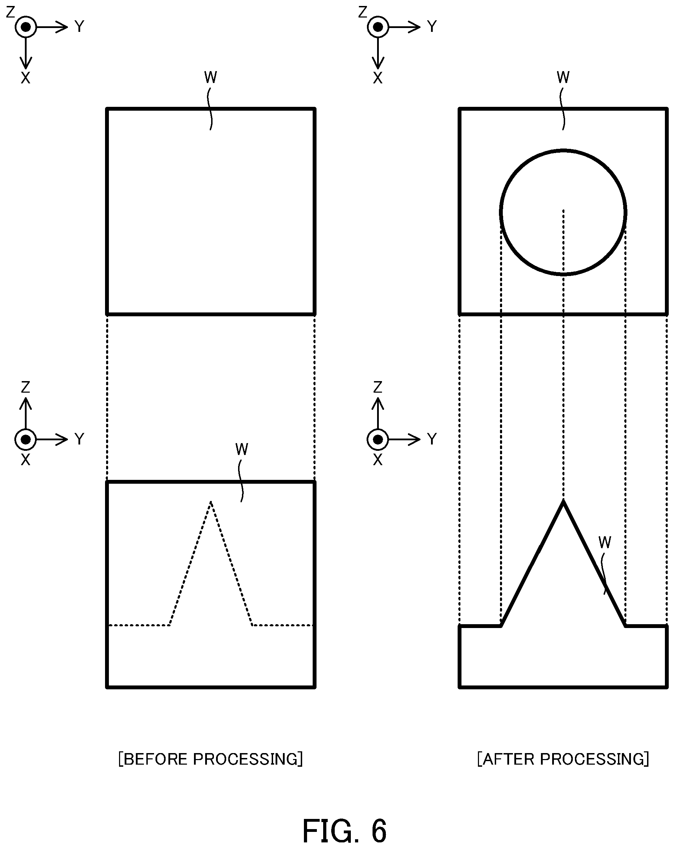

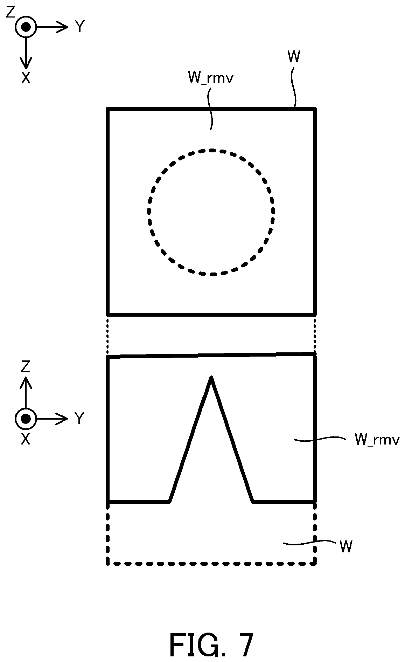

The processing apparatus 1 may process the workpiece W so that the shape of the workpiece W becomes a desired shape by repeating an operation for removing the removal layer SL having the thickness corresponding to the standard processed amount Δz. In the below-described description, for convenience of description, an example in which the workpiece W is processed so that the shape of the workpiece W, which had a cuboid shape illustrated on a left side in FIG. 6, becomes the shape in which a cone protrudes from a plate-like member illustrated on a right side in FIG. 6 will be described. In this case, the processing apparatus 1 performs, on the workpiece W, the subtractive manufacturing for removing the removal target part W_rmv that should be removed from the workpiece W, as illustrated in FIG. 7.

Note that FIG. 6 illustrates an example in which the surface of the workpiece W (especially the surface of the workpiece W on which the subtractive manufacturing is performed) before the subtractive manufacturing is performed thereon is a surface along the XY plane. However, the surface of the workpiece W (especially the surface of the workpiece W on which the subtractive manufacturing is performed) may include a surface inclined with respect to the XY plane. The surface of the workpiece W (especially the surface of the workpiece W on which the subtractive manufacturing is performed) may include a curved surface.

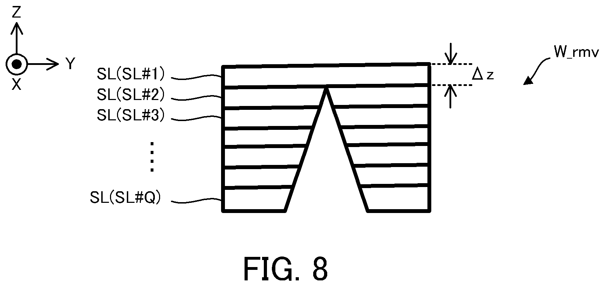

In order to perform the subtractive manufacturing for removing the removal target part W_rmv, the processing apparatus 1 removes a plurality of removal layers SL, which are obtained by slicing the removal target part W_rmv along the Z-axis direction, in sequence, as illustrated in FIG. 8. Each removal layer SL may be considered to correspond to a removed part that is removed by the scan of the processing light EL performed in a state in which a positional relationship between the workpiece W and the processing head 112 in the Z-axis direction (especially, a positional relationship between the workpiece W and the light concentration position of the processing light EL) is fixed. In this case, the processing apparatus 1 firstly performs the removal process for removing the uppermost removal layer SL#1 from the workpiece W. Then, the processing apparatus 1 moves the stage 132 and / or the processing head 112 so that the processing head 112 is closer to the workpiece W by a distance corresponding to the standard processed amount Δz. Alternatively, the processing apparatus 1 controls the irradiation optical system 1120 (especially the focus changing optical system 1121) so that the light concentration position of the processing light EL is closer to the workpiece W by the distance corresponding to the standard processed amount Δz. Then, the processing apparatus 1 performs the subtractive manufacturing for removing the second removal layer SL#2 from the workpiece W from which the first removal layer SL#1 has been removed. Then, the processing apparatus 1 repeats the same operation until all of the removal layers SL (for example, in the example illustrated in FIG. 8, Q (wherein, Q is a constant value representing an integer number that is equal to or larger than 2) removal layers SL#1 to SL#Q) are removed. As a result, the shape of the workpiece W, which had the cuboid shape illustrated on the left side in FIG. 6, becomes the shape in which the cone protrudes from the plate-like member illustrated on the right side in FIG. 6.

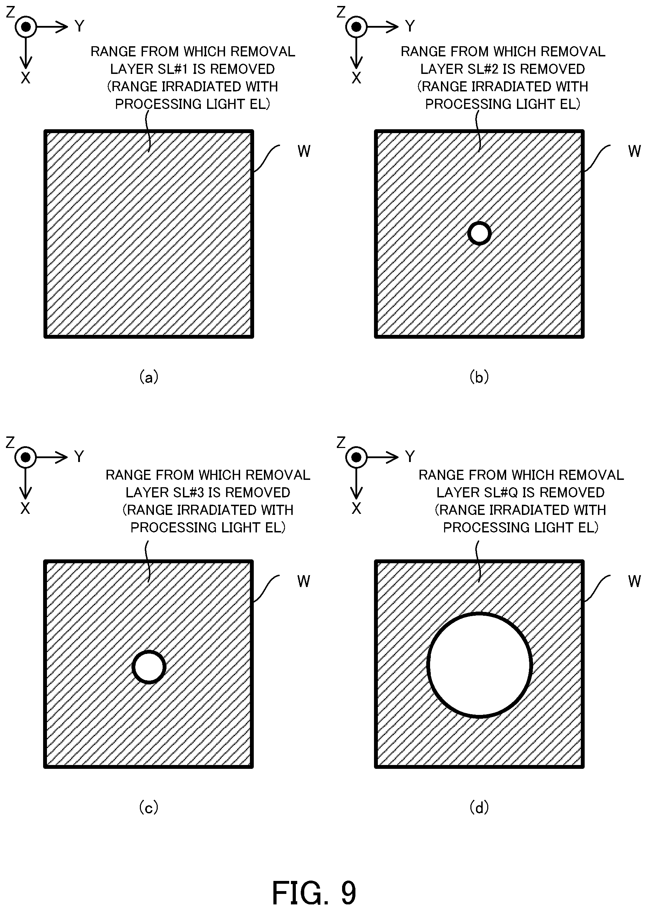

The processing apparatus 1 may remove the plurality of removal layers SL in sequence based on slice data indicating an area on which the subtractive manufacturing is performed on the surface of the workpiece W in the process of removing each removal layer SL. Note that the slice data may be one example of the processing control information for processing the workpiece W. For example, the processing apparatus 1 may remove the removal layer SL#1 by irradiating an area indicated by first slice data on the surface of the workpiece W with the processing light EL based on the first slice data (see FIG. 9(a)) indicating an area on which the subtractive manufacturing is performed on the surface of the workpiece W in the process of removing the removal layer SL#1. Then, the processing apparatus 1 may remove the removal layer SL#2 by irradiating an area indicated by second slice data on the surface of the workpiece W with the processing light EL based on the second slice data (see FIG. 9(b)) indicating an area on which the subtractive manufacturing is performed on the surface of the workpiece W in the process of removing the removal layer SL#2. Then, the processing apparatus 1 may remove the removal layer SL#3 by irradiating an area indicated by third slice data on the surface of the workpiece W with the processing light EL based on the third slice data (see FIG. 9(c)) indicating an area on which the subtractive manufacturing is performed on the surface of the workpiece W in the process of removing the removal layer SL#3. Then, the processing apparatus 1 repeats the same operation. Finally, the processing apparatus 1 may remove the removal layer SL#Q by irradiating an area indicated by Q-th slice data on the surface of the workpiece W with the processing light EL based on the Q-th slice data (see FIG. 9(d)) indicating an area on which the subtractive manufacturing is performed on the surface of the workpiece W in the process of removing the removal layer SL#Q. Incidentally, in each of FIG. 9(a) to FIG. 9(d), the area on which the subtractive manufacturing is performed (namely, an area that is irradiated with the processing light EL) on the surface of the workpiece W is indicated by hatching.

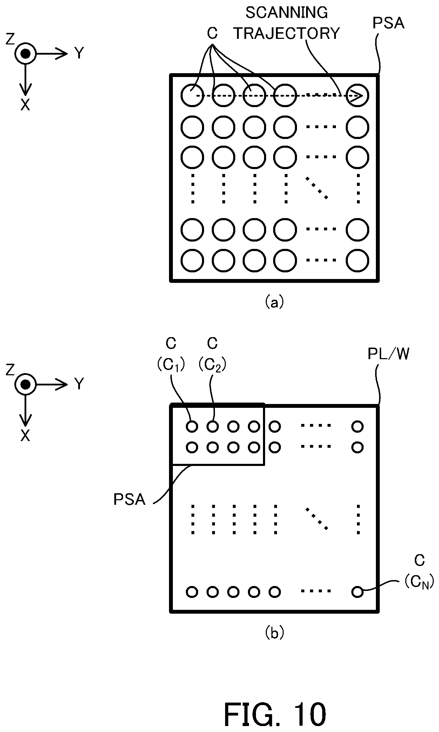

The processing apparatus 1 scans the processing area PSA set on the surface of the workpiece W with the processing light EL along the XY plane. In this case, as illustrated in FIG. 10(a), irradiation target positions (irradiation positions) C that may be irradiated with the processing light EL may be considered to be set in the processing area PSA, wherein the number of the irradiation target positions C is based on a scanning speed of the processing light EL and a pulse frequency of the processing light EL. Furthermore, the processing apparatus 1 moves the processing area PSA along the XY plane on the surface of the workpiece W by moving at least one of the processing head 112 and the stage 132. Therefore, as illustrated in FIG. 10(b), the irradiation target positions C that may be irradiated with the processing light EL may be considered to be set in a processing surface PL (typically, a surface along the XY plane), which is along a scanning direction of the processing light EL in the processing area PSA and a movement direction of the processing area PSA and in which the processing apparatus 1 performs the subtractive manufacturing, in the process of removing each removal layer SL, wherein the number of the irradiation target positions C is based on the number of the irradiation target positions C set in the processing area PSA and the number of times which the processing area PSA moves on the surface of the workpiece W (namely, the number of times which the processing area PSA is set on the surface of the workpiece W). In this case, a plurality of irradiation target positions C may be considered to be set on the surface of the workpiece W in the process of removing each removal layer SL. In the below-described description, for convenience of description, an example in which N (wherein, N is a constant value representing an integer number that is equal to or larger than 2) irradiation target positions C (specifically, irradiation target positions C₁ to C_{N}) are set in the processing surface PL, as illustrated in FIG. 10(b), will be described.

FIG. 10(a) and FIG. 10(b) schematically illustrates each irradiation target position C by using a beam spot (namely, a circular beam spot) of the processing light EL with which the irradiation target position C is irradiated. The beam spot of the processing light EL may mean an area that is irradiated with the processing light EL whose intensity exceeds a predetermined intensity threshold value. In this case, an area outside a circle schematically illustrating each irradiation target position C may be irradiated with the processing light EL whose intensity does not exceed the predetermined intensity threshold value, in a situation where each irradiation target position C is irradiated with the processing light EL. Alternatively, the beam spot of the processing light EL may mean an area corresponding to a full width at half maximum of an intensity distribution (for example, a Gaussian distribution) of the processing light EL.

Moreover, FIG. 10(a) and FIG. 10(b) illustrate an example in which one irradiation target position C does not overlap with other irradiation target positions C that is adjacent to the one irradiation target position C, in order to prioritize a visibility of the drawings. However, in practice, one irradiation target position C and other irradiation target position C that is adjacent to the one irradiation target position C may overlap with each other at least partially. Namely, the beam spot of the processing light EL with which one irradiation target position C is irradiated and the beam spot of the processing light EL with which other irradiation target position C that is adjacent to the one irradiation target position C may overlap with each other at least partially.

The slice data may be considered to be equivalent to information indicating whether or not each of the irradiation target positions C₁ to C_{N} is irradiated with the processing light EL As one example, the Q-th slice data illustrated in FIG. 9(d) may be considered to be equivalent to information indicating that at least one irradiation target position C that is included in an hatched area illustrated in FIG. 9(d) among the irradiation target positions C₁ to C_{N} should be irradiated with the processing light EL but at least other one irradiation target position C that is not included in the hatched area illustrated in FIG. 9(d) should not be irradiated with the processing light EL.

The above-described data generation server 2 may generate the control data for generating the slice data illustrated in FIG. 9(a) to FIG. 9(d). For example, each of the Q slice data indicates whether or not each of the irradiation target positions C₁ to C_{N} is irradiated with the processing light EL. Namely, it can be said that each of the Q slice data substantially indicates whether the number of times which each of the irradiation target positions C₁ to C_{N} should be irradiated with the processing light EL is 1 or 0 (alternatively, any other number) in the process of removing each removal layer SL corresponding to each of the Q slice data. Therefore, it can be said that the Q slice data as a whole substantially indicate the number of times which each of the irradiation target positions C₁ to C_{N} should be irradiated with the processing light EL. In this case, the data generation server 2 may generate the control data indicating the number of times which each of the irradiation target positions C₁ to C_{N} should be irradiated with the processing light EL. In this case, the control unit 14 may generate the Q slice data based on the control data and remove the Q removal layers SL in sequence based on the Q slice data.

Incidentally, since the processing light EL is the pulsed light as described above, the number of times which the irradiation target position C should be irradiated with the processing light EL may mean the number of times which the irradiation target position C should be irradiated with the processing light EL for a unit number of pulses. In other words, the number of times which the irradiation target position C should be irradiated with the processing light EL may mean the number of times which the irradiation target position C should be irradiated with the pulse of pulsed light included in the processing light EL. Namely, the number of times which the irradiation target position C should be irradiated with the processing light EL may mean the number of pulses with which the irradiation target position C should be irradiated. In the below-described description, the number of times which the irradiation target position C should be irradiated with the processing light EL is referred to as a target pulse number for convenience of description, because the processing light is the pulsed light. Note that the target pulse number is one specific example of the above-described processing condition of the processing apparatus 1.

### (3) Data Generation Server 2

Next, the data generation server 2 of the processing system SYS will be described. In the below-described description, the data generation server 2, which generates the control data indicating the target pulse number that is one example of the processing condition, will be described. Namely, in the below-described description, the data generation server 2, which generates target pulse number information indicating the target pulse number that is the number of times which the irradiation target position C₁ is irradiated with the processing light EL, the target pulse number that is the number of times which the irradiation target position C₂ is irradiated with the processing light EL, ..., and the target pulse number that is the number of times which the irradiation target position C_{N} is irradiated with the processing light EL, as at least a part of the control data, will be described.

### (3-1) Configuration of Data Generation Server 2

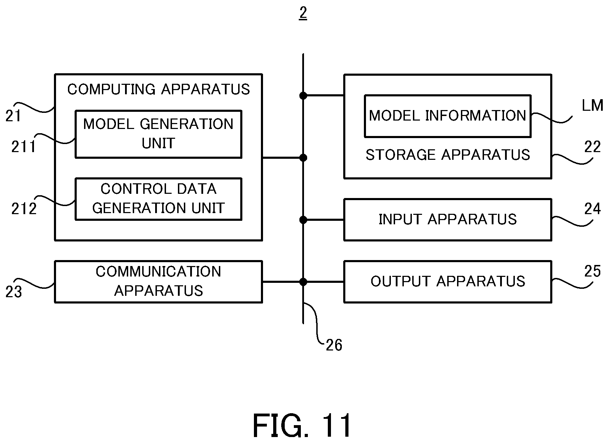

Firstly, with reference to FIG. 11, a configuration of data generation server 2 will be described. FIG. 11 is a block diagram that illustrates the configuration of the data generation server 2.

As illustrated in FIG. 11, the data generation server 2 includes a computing apparatus 21, a storage apparatus 22, and a communication apparatus 23. Furthermore, data generation server 2 may include an input apparatus 24 and an output apparatus 25. However, the data generation server 2 may not include at least one of the input apparatus 24 and the output apparatus 25. The computing apparatus 21, the storage apparatus 22, the communication apparatus 23, the input apparatus 24, and the output apparatus 25 may be connected through a data bus 26.

The computing apparatus 21 includes at least one of a CPU and a GPU, for example. The computing apparatus 21 reads a computer program. For example, the computing apparatus 21 may read the computer program stored in the storage apparatus 22. For example, the computing apparatus 21 may read the computer program stored in a non-transitory computer-readable recording medium by using a non-illustrated recording medium reading apparatus. The computing apparatus 21 may acquire (namely, may download or read) the computer program from a non-illustrated apparatus disposed at the outside of the data generation server 2 through the communication apparatus 23. Namely, the computing apparatus 21 may acquire (namely, may download or read) the computer program stored in a storage apparatus 142 of the non-illustrated apparatus disposed at the outside of the data generation server 2 through the communication apparatus 23. The computing apparatus 21 executes the read computer program. As a result, a logical functional block for executing an operations that should be performed by the data generation server 2 (for example, data generation operation for generating the control data) is implemented in the computing apparatus 21. Namely, the computing apparatus 21 is configured to serve as a controller for implementing the logical functional block for executing the operation that should be performed by the data generation server 2. In this case, any apparatus (typically, a computer) executing the computer program is configured to serve as the data generation server 2.

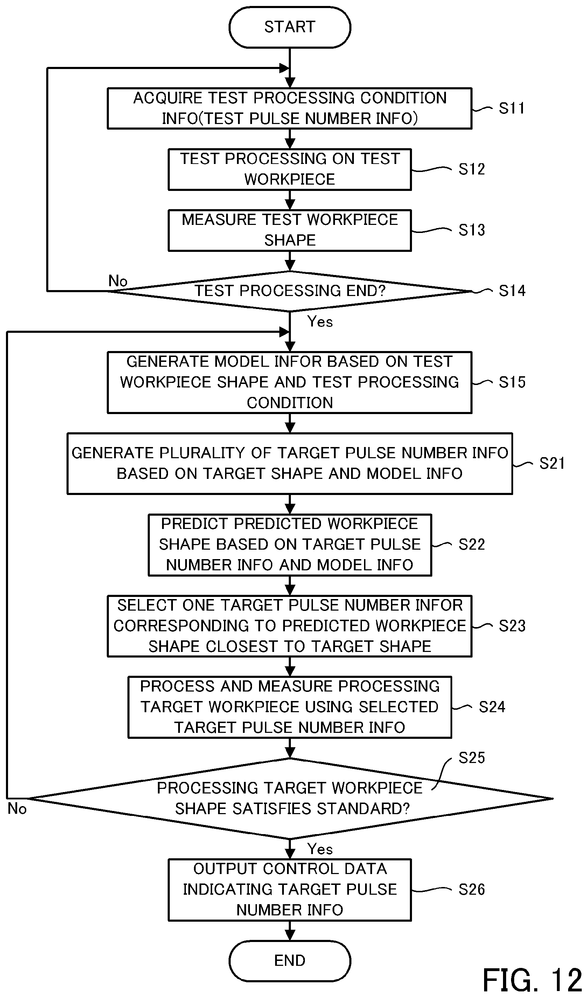

FIG. 11 illustrates an example of the logical functional block implemented in the computing apparatus 21 to perform the operation for generating the control data indicating the target pulse number. As illustrated in FIG. 11, in the computing apparatus 21, a model generation unit 211 and a control data generation unit 212 are implemented. Note that an operation of each of the model generation unit 211 and the control data generation unit 212 will be described in detail later with reference to FIG. 12 and so on, however, an overview thereof is briefly described here. The model generation unit 211 generates model information LM. The model information LM is information that indicates a relationship between the number of times which each of the irradiation target positions C₁ to C_{N} is irradiated with the processing light EL to process the workpiece (for example, the target pulse count) and a shape of the workpiece W after processing. The control data generation unit 212 calculates the target pulse number based on the model information LM. Specifically, the control data generation unit 212 calculates, based on the model information LM, the target pulse number for processing the workpiece W so that the shape of the workpiece W becomes a desired target shape. Namely, the control data generation unit 212 generates the control data indicating the target pulse number.

An arithmetic model that is buildable by machine learning may be implemented in the computing apparatus 21 by the computing apparatus 21 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 21 may perform the data generation operation by using the arithmetic model. Namely, the data generation operation may include an operation for generating the control data by using the arithmetic model. Namely, at least one of the model generation unit 211 and the control data generation unit 212 may be realized by the arithmetic model. In other words, the operation performed by at least one of the model generation unit 211 and the control data generation unit 212 may be performed by the arithmetic model. Note that the arithmetic model that has been built by off-line machine learning using training data may be implemented in the computing apparatus 21. Moreover, the arithmetic model implemented in the computing apparatus 21 may be updated by online machine learning on the computing apparatus 21. Alternatively, the computing apparatus 21 may generate the control data by using the arithmetic model implemented in an apparatus external to the computing apparatus 21 (namely, an apparatus external to the data generation server 2), in addition to or instead of the arithmetic model implemented on the computing apparatus 21.

Note that the computing apparatus 21 (namely, the data generation server 2) may not include at least part of the functional blocks (namely, the model generation unit 211 and the control data generation unit 212) in the computing apparatus 21 of the data generation server 2. For example, the client terminal apparatus 3 may include at least part of the functional blocks (namely, the model generation unit 211 and the control data generation unit 212) in the computing apparatus 21. For example, the processing apparatus 1 (for example, the control unit 14) may include at least part of the functional blocks (namely, the model generation unit 211 and the control data generation unit 212) in the computing apparatus 21.

The storage apparatus 22 is configured to store desired data. For example, the storage apparatus 22 may temporarily store the computer program that is executed by the computing apparatus 21. The storage apparatus 22 may temporarily store data temporarily used by the computing apparatus 21 when the computing apparatus 21 executes the computer program. The storage apparatus 22 may store data stored for a long term by the data generation server 2. In the present example embodiment, the storage apparatus 22 may store the model information LM generated by the model generation unit 211. Note that the storage apparatus 22 may include at least one of a RAM (Random Access Memory), a ROM (Read Only Memory), a hard disk apparatus, a magneto-optical disc, a SSD (Solid State Drive) and a disk array apparatus. Namely, the storage apparatus 22 may include a non-transitory recording medium.

The communication apparatus 23 is configured to communicate with at least one of the processing apparatus 1 and the client terminal apparatus 3 through the communication network 4. In the present example embodiment, the communication apparatus 23 is configured to receive the reference information, which is referred by the data generation server 2 to generate the control data, from at least one of the processing apparatus 1 and the client terminal apparatus 3 through the communication network 4. Furthermore, the communication apparatus 23 is configured to transmits the generated control data to at least one of the processing apparatus 1 and the client terminal apparatus 3 through the communication network 4.

The input apparatus 24 is an apparatus that is configured to receive an input of information from an outside of the data generation server 2 to the data generation server 2. For example, the input apparatus 24 may include an operating apparatus (for example, at least one of a keyboard, a mouse, and a touch panel) that is operable by a server user. For example, the input apparatus 24 may include a reading apparatus that is configured to read information recorded as data on a recording medium that is attachable to the data generation server 2.

The output apparatus 25 is an apparatus that outputs information to the outside of the data generation server 2. For example, the output apparatus 25 may output the information as an image. Namely, the output apparatus 25 may include a display apparatus (a so-called display) that is configured to display an image indicating the information to be outputted. For example, the output apparatus 25 may output the information as audio. Namely, the output apparatus 25 may include an audio apparatus (so-called a speaker) that is configured output the audio. For example, the output apparatus 25 may output the information on a paper. Namely, the output apparatus 25 may include a printing apparatus (so-called a printer) that is configured to print desired information on the paper.

The data generation server 2 may be configured to serve as the client terminal apparatus 3. For example, a certain computer may be used as the data generation server 2 and may be used as the client terminal apparatus 3. Namely, the data generation server 2 and the client terminal apparatus 3 may be an integrated apparatus (alternatively, an integrated system). However, typically, two different computers may be used as the data generation server 2 and the client terminal apparatus 3, respectively.

### (3-2) Data Generation Operation performed by Data Generation Server 2

Next, with reference to FIG. 12, the data generation operation (namely, the operation for generating the control data) performed by the data generation server 2 will be described. FIG. 12 is a flowchart that illustrates a flow of the data generation operation (namely, the operation for generating the control data) performed by the data generation server 2.

As illustrated in FIG. 12, first, the data generation server 2 generates the model information LM that is used to generate the control data (a step S11 to a step S15). In the present example embodiment, the data generation server 2 may generate the model information LM by performing a machine learning using training data. In this case, the data generation server 2 first acquires, as the training data, information related to a result of a test processing that is actually performed by the processing apparatus 1 on a workpiece W for the test processing.

Note that the workpiece W for the test processing is referred to as a test workpiece W_test and the workpiece W that is actually processed by using the control data generated by the data generation server 2 is referred to as a processing target workpiece W_target, to distinguish them in the below-described description. The test workpiece W_test may be a workpiece W whose regulation is the same as that of the processing target workpiece W_target. The test workpiece W_test may be a workpiece W whose size is the same as that of the processing target workpiece W_target. The test workpiece W_test may be a workpiece W whose shape is the same as that of the processing target workpiece W_target. The test workpiece W_test may be a workpiece W that is made of a material whose type is the same as that of the processing target workpiece W_target.

In order to acquire the result of the test processing, which is performed by the processing apparatus 1 on the test workpiece W, as the training data, the model generation unit 211 of the data generation server 2 acquires test processing condition information that indicates the processing condition of the processing apparatus 1 performing the test processing (the step S11). Namely, the model generation unit 211 acquires the test processing condition information that is related to the processing condition of the processing apparatus 1 performing the test processing (the step S11). The test processing condition information indicates the processing condition for processing the test workpiece W_test so that the shape of the test workpiece W_test becomes a desired test target shape. Namely, the test processing condition information indicates the processing condition for the test processing that is performed on the test workpiece W_test so that the shape of the test workpiece W_test becomes the desired test target shape.

The test target shape is the same as the processing target shape that is a shape which the processing target workpiece W_target should have after processing. Namely, the test target shape is the same as the processing target shape that is a target shape of the processing target workpiece W_target after processing. However, the test target shape may be a shape that is different from the processing target shape. In a case where the test processing is performed a plurality of times by using a plurality of different test processing condition information as described below, at least one of the test processing for processing the test workpiece W_test so that the shape of the test workpiece W_test becomes the test target shape that is the same as the processing target shape and the test processing for processing the test workpiece W_test so that the shape of the test workpiece W_test becomes the test target shape that is different from the processing target shape may be performed.

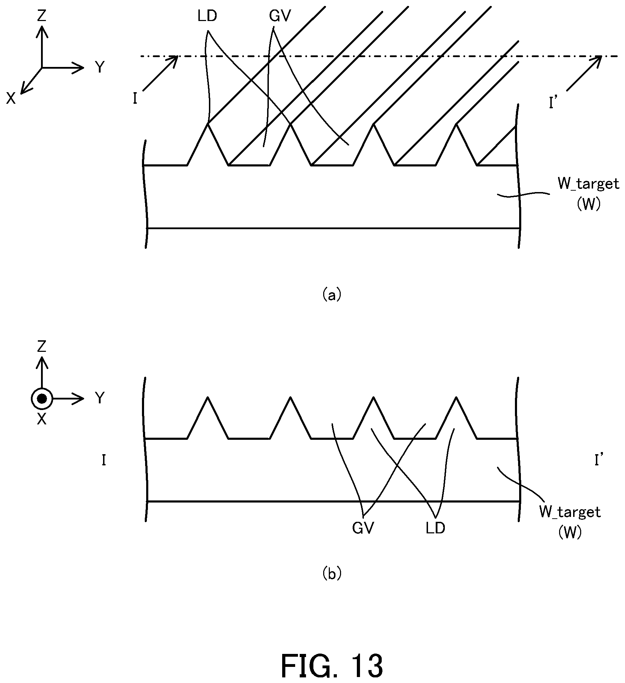

As described above, the processing apparatus 1 may process the processing target workpiece W_target to form the riblet structure on the workpiece W. One example of the riblet structure is illustrated in FIG. 13(a) and FIG. 13(b). As illustrated in FIG. 13(a) and FIG. 13(b), the riblet structure may include a structure in which a plurality of grooves GV, each of which extends along a first direction (for example, the X-axis direction) that is along the surface of the processing target workpiece W_target, are aligned along a second direction (for example, the Y-axis direction) that is along the surface of the processing target workpiece W_target and that intersects the first direction. In other words, the riblet structure may include a structure in which a plurality of convex structural object LD, each of which extends along the first direction (for example, the X-axis direction) that is along the surface of the processing target workpiece W_target, are aligned along the second direction (for example, the Y-axis direction) that is along the surface of the processing target workpiece W_target and that intersects the first direction. In this case, at least one of the test target shape and the processing target shape may be a shape that corresponds to the riblet structure. For example, a three-dimensional shape of the riblet structure may be used as at least one of the test target shape and the processing target shape. For example, a three-dimensional profile indicating the three-dimensional shape of the riblet structure (for example, a three-dimensional profile indicating a three-dimensional shape illustrated in FIG. 13(a)) may be used as at least one of the test target shape and the processing target shape.

At least one of the test target shape and the processing target shape may be a shape whose height varies in at least one dimensional direction. Specifically, the test target shape may be a shape that allows the height of the test workpiece W_test (for example, the height of the surface of the test workpiece W_test) to vary in at least one dimensional direction, and the processing target shape may be a shape that allows the height of the processing target workpiece W_target (for example, the height of the surface of the processing target workpiece W_target) to vary in at least one dimensional direction. For example, as illustrated in FIG. 13(a) and FIG. 13(b), the shape of the above-described riblet structure has a shape that allows the height (namely, a size in a third direction that intersects the first and second directions, and a size in the Z-axis direction, for example) to vary along the second direction in which the plurality of grooves GV (the plurality of convex structural objects LD) are arranged. In this case, at least one of the test target shape and the processing target shape may have a shape that allows the height to vary along the second direction in which the plurality of grooves GV (the plurality of convex structures LD) are arranged. In other words, the test target shape may be a cross-sectional profile (namely, a height profile or a two-dimensional profile, and a two-dimensional profile indicating a two-dimensional shape illustrated in FIG. 13(b)) indicating the height that varies along the second direction in which the plurality of grooves GV (the plurality of convex structures LD) are arranged, as illustrated in FIG. 13(b).

In the present example embodiment, the test processing condition information includes at least test pulse number information indicating a test pulse number that is a number of times which the irradiation target position C is irradiated with the processing light EL for the test processing. Specifically, since N irradiation target positions C₁ to C_{N} are set on the processing surface PL of the workpiece W as described above, the N irradiation target positions C₁ to C_{N} are also set on the processing surface PL of the test workpiece W_test that is the workpiece Wt. In this case, the test processing condition information may include the test pulse number information indicating the test pulse number that is a number of times which the irradiation target position C₁ is irradiated with the processing light EL. the test pulse number that is a number of times which the irradiation target position C₂ is irradiated with the processing light EL, ..., and the test pulse number that is a number of times which the irradiation target position C_{N} is irradiated with the processing light EL.

The model generation unit 211 may acquire the test processing condition information, which is input to the data generation server 2 by using the input apparatus 24. For example, the model generation unit 211 may acquire the test processing condition information, which is input to the data generation server 2 by a user of the processing system SYS using the input apparatus 24.

The model generation unit 211 may acquire the test processing condition information, which is transmitted to the data generation server 2, by using the communication apparatus 23. For example, the model generation unit 211 may acquire the test processing condition information by receiving the test processing condition information, which is stored on a server external to the data generation server 2, by using the communication apparatus 23.

The model generation unit 211 may acquire the test processing condition information by generating the test processing condition information. For example, the model generation unit 211 may set the processing condition for processing the test workpiece W_test so that the shape of the test workpiece W_test becomes the desired test target shape, to thereby generate the test processing condition information indicating the set processing condition.

Again in FIG. 12, after the test processing condition information is acquired at the step S11, the test workpiece W_test is processed based on the test processing condition information acquired at the step S11 (the step S12). Specifically, the model generation unit 211 controls the processing apparatus 1 to process the test workpiece W_test based on the test processing condition information. For example, the model generation unit 211 may transmit the test processing condition information to the processing apparatus 1 as the control data. The processing apparatus 1 (especially, the control unit 14) may generate, based on the test processing condition information transmitted from the data generation server 2, the processing control information for controlling the processing apparatus 1 to perform the test processing. For example, the control unit 14 may generate the processing control information for controlling the processing apparatus 1 to process the test workpiece W_test so that the shape of the test workpiece W_test becomes the desired test target shape. Then, the processing apparatus 1 may process the test workpiece W_test based on the generated processing control information. Namely, the processing apparatus 1 may perform the test processing on the test workpiece W_test based on the generated processing control information.

After the test processing is performed on the test workpiece W_test at the step S12, a test workpiece shape, which is the shape of the test workpiece W_test on which the test processing has been performed, is measured (the step S13). Namely, the test workpiece shape, which is the shape of the test workpiece W_test after the test workpiece W_test is processed based on the test processing condition information acquired at the step S11, is measured (the step S13). For example, the processing apparatus 1 may measure the test workpiece shape by using the measurement unit 12. Then, test workpiece shape information (test shape information), which indicates a measured result of the test workpiece shape by the measurement unit 12, may be transmitted from the processing apparatus 1 to the data generation server 2 through the communication network 4. The model generation unit 211 of the data generation server 2 may acquire the test workpiece shape information (the test shape information), which indicates the measured result of the test workpiece shape by the measurement unit 12.

The acquired test workpiece shape information is information that is related to a result of the test processing performed by the processing apparatus 1 on the test workpiece W_test. Namely, the model generation unit 211 acquires the test workpiece shape information as the training data for generating the model information LM. More specifically, the model generation unit 211 acquires, as the training data for generating the model information LM, data in which the test processing condition information acquired at the step S11 is associated with the test workpiece shape information that is related to the result of the test processing performed based on that test processing condition information.

Then, the model generation unit 211 determines whether or not the test processing should be ended (the step S14). For example, the model generation unit 211 may determine that the test processing should be ended, in a case where the number of acquired training data is larger than a predetermined sample size that indicates the number of training data required to generate the model information LM. On the other hand, the model generation unit 211 may determine that the test processing should not be ended, in a case where the number of acquired training data is smaller than the predetermined sample size. Typically, it is preferable to use a plurality of training data to generate the model information LM. Therefore, the predetermined sample size is preferably a number that is equal to or larger than two.

In a case where it is determined as a result of the determination at the step S14 that the test processing should not be ended (the step S14: No), the operation from the step S11 to the step S13 is performed again. Namely, the model generation unit 211 acquires new test processing condition information (the step S11), the test processing is performed on the test workpiece W_test based on the newly acquired test processing condition information (the step S12), and the test workpiece shape, which is the shape of the test workpiece W_test on which the test processing has been performed based on the newly acquired test processing condition information, is measured (the step S13).

Thus, in the present example embodiment, the test processing may be performed the plurality of times to acquire the plurality of training data. For example, first test processing condition information may be acquired (the step S11), the test processing may be performed on a first test workpiece W_test based on the first test processing condition information (the step S12), and a first test workpiece shape, which is the shape of the first test workpiece W_test on which the test processing has been performed based on the first test processing condition information, may be measured (the step S13). As a result, first training data, in which the first test processing condition information is associated with the test workpiece shape information indicating the first test workpiece shape, is acquired. Then, second test processing condition information that is different from the first test processing condition information may be acquired (the step S11), the test processing may be performed on a second test workpiece W_test based on the second test processing condition information (the step S12), and a second test workpiece shape, which is the shape of the second test workpiece W_test on which the test processing has been performed based on the second test processing condition information, may be measured (the step S13). Note that the second test workpiece W_test may be different from the first test workpiece W_test. As a result, a second training data, in which the second test processing condition information is associated with the test workpiece shape information indicating the second test workpiece shape, is acquired. This operation is repeated until the acquisition of the required number of training data is complete.

On the other hand, in a case where it is determined as a result of the determination at the step S14 that the test processing should be ended (the step S14: Yes), the model generation unit 211 generates the model information LM by performing the machine learning using a training data set that includes the plurality of acquired training data.

The model information LM is the information indicating the relationship between the number of times which each of the irradiation target positions C₁ to C_{N} is irradiated with the processing light EL for processing the workpiece W and the shape of the workpiece W after processing. In this case, the model generation unit 211 may perform the machine learning using the training data in which the test processing condition information (the test pulse number) is associated with the test workpiece shape information so that the model information LM becomes the information that properly indicates the relationship between the number of times which each of the irradiation target positions C₁ to C_{N} is irradiated with the processing light EL for processing the test workpiece W_test and the shape of the test workpiece W_test after processing. Namely, the model generation unit 211 may perform the machine learning using the training data in which the test processing condition information (the test pulse number) is associated with the test workpiece shape information so that the model information LM becomes the information that properly indicates the relationship between the test processing condition information and the test workpiece shape information.

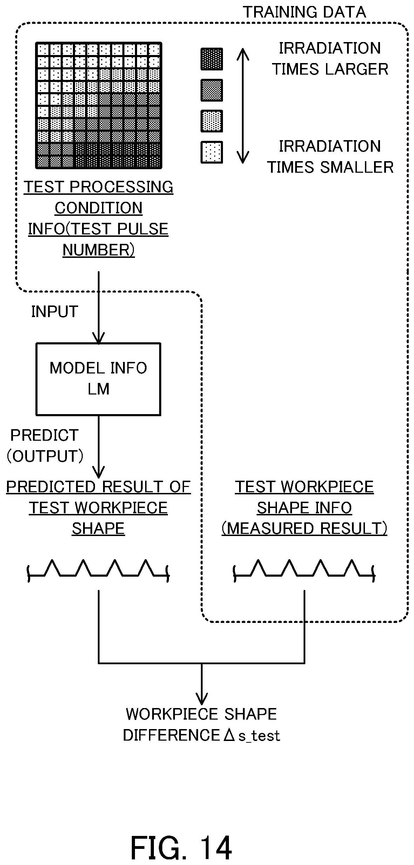

Here, in a case where the model information LM is the model information that indicates the relationship between the test pulse number and the test workpiece shape, the model generation unit 211 may calculate (in other words, predict) the other one of the test pulse number and the test workpiece shape based on the model information LM and one of the test pulse number and the test workpiece shape. In this case, in order to perform the machine learning for generating the model information LM, the model generation unit 211 may predict the test workpiece shape based on the test pulse number information, which indicates the test pulse number, and the model information LM, as illustrated in FIG. 14. Note that the model generation unit 211 may predict the test workpiece shape by using default model information LM (in other words, the model information LM in an initial state) in a case where the model information LM has not yet been generated (namely, the operation at the step S15 in FIG. 12 has not been performed even once). In a case where the model information LM has already been generated (namely, the operation at the step S15 in FIG. 12 has been performed at least once), the model generation unit 211 may predict the test workpiece shape by using the generated model information LM.

Here, a test work shape difference Δs_test, which is a difference between a predicted result of the test work shape based on the model information LM and an actual measured result of the test work shape (namely, the test work shape information), becomes smaller as the model information LM is closer to ideal model information LM. Therefore, the model generation unit 211 may generate the model information LM by performing the machine learning so that the test work shape difference Δs_test is smaller (alternatively, is minimized). For example, in a case where the plurality of training data are acquired, the model generation unit 211 may generate a plurality of predicted results of the test work shape based on the model information LM and the plurality of test pulse number information, which are included in the plurality of training data, respectively. For example, the model generation unit 211 may generate the predicted result of a first test workpiece shape included in first training data based on the model information LM and first test pulse number information included in the first training data, and generate the predicted result of a second test workpiece shape included in second training data based on the model information LM and second test pulse number information included in the second training data. Then, the model generation unit 211 may calculate a plurality of test work shape differences Δs_test, which are the differences between the plurality of predicted results of the test work shape based on the model information LM and the plurality of measured results of the test work shape included in the plurality of training data (namely, the plurality of test work shape information), respectively. For example, the model generation unit 211 may calculate a first test workpiece difference Δs_test that is a difference between the first test workpiece shape, which is actually included in the first training data, and the predicted result of the first test workpiece shape, and calculate a second test work shape difference Δs_test that is a difference between the second test work shape, which is actually included in the second training data, and the predicted result of the second test work shape. Then, the model generation unit 211 may generate the model information LM by performing machine learning so that a loss determined based on the plurality of test work shape differences Δs_test is smaller (alternatively, is minimized). The loss determined based on the plurality of test work shape differences Δs_test may be a loss whose value is smaller as the plurality of test work shape differences Δs_test are smaller. A mean squared error, which is calculated by dividing a total sum of squares of the plurality of test work shape differences Δs_test by a total number of the test work shape differences Δs_test, and a mean absolute error, which is calculated by dividing a total sum of absolute values of the plurality of test work shape differences Δs_test by the total number of test work shape differences Δs_test are examples of the loss.

The model information LM may be any information as long as it is information indicating the relationship between the test pulse number and the test work shape. For example, model information LM may include model information that is configured to predict the test work shape from the test pulse number. For example, the model information LM may include information that is configured to predict the test pulse number from the test workpiece shape. For example, the model information LM may include model information that is configured to output the predicted result of the test workpiece shape in a case where the test pulse number is input thereto. For example, the model information LM may include information that is configured to output the predicted result of the test pulse number in a case where the test workpiece shape is input thereto.

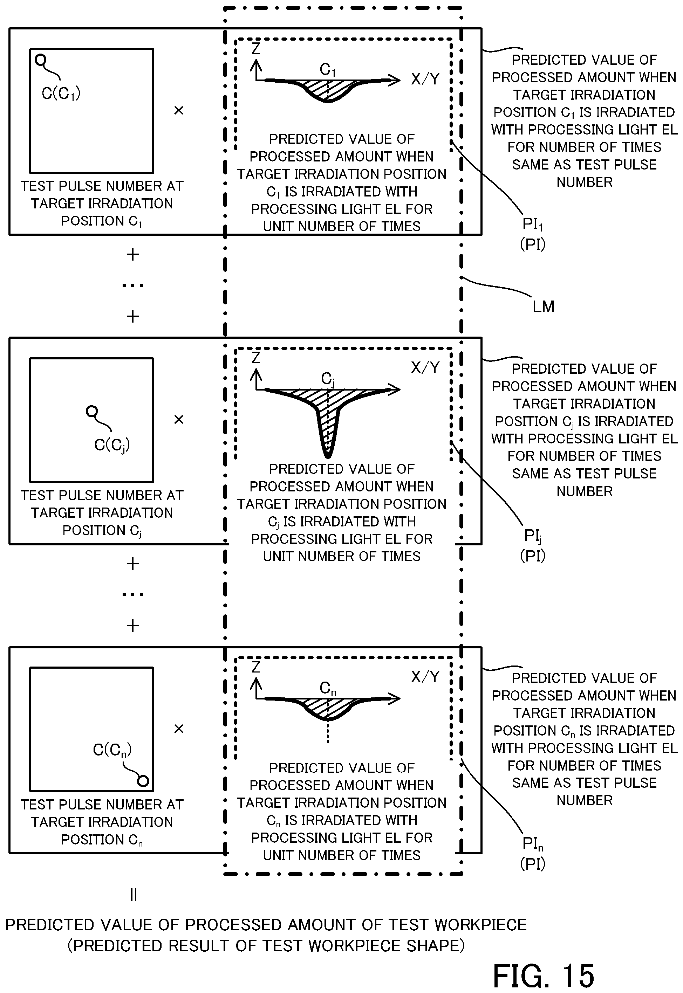

One example of the model information LM is illustrated in FIG. 15. As illustrated in FIG. 15, the model information LM may include prediction information PI that indicates a predicted value of a processed amount of the test work W_test in a case where the irradiation target position C is irradiated with the processing light EL a unit number of times. Specifically, as illustrated in FIG. 15, the model information LM may include prediction information PI₁, which indicates the predicted value of the processed amount of the test work W_test in a case where the irradiation target position C₁ is irradiated with the processing light EL a unit number of times, prediction information PI₂, which indicates the predicted value of the processed amount of the test work W_test in a case where the irradiation target position C₂ is irradiated with the processing light EL a unit number of times, ..., prediction information PIᵢ, which indicates the predicted value of the processed amount of the test work W_test in a case where the irradiation target position Cᵢ (wherein i is a variable number representing an integer number that is equal to or larger than 1 and that is equal to or smaller than n) is irradiated with the processing light EL a unit number of times, ..., and prediction information PIₙ, which indicates the predicted value of the processed amount of the test work W_test in a case where the irradiation target position Cₙ is irradiated with the processing light EL a unit number of times. Note that an example in which the unit number of times is 1 is described in the present example embodiment.

The "processed amount of the test work W_test" indicated by the prediction information PI may mean a distribution of the processed amount (specifically, a removed amount) of the test work W_test in a direction along the surface of the test work W_test (for example, at least one of the X-axis direction and the Y-axis direction). Namely, the "processed amount of the test work W_test" indicated by the prediction information PI may mean a one-dimensional distribution of the processed amount of the test work W_test. Alternatively, the "processed amount of the test work W_test" indicated by the prediction information PI may mean a distribution of the processed amount of the test work W_test in a plane along the surface of the test work W_test (for example, a plane along the XY plane). Namely, the "processed amount of the test work W_test" indicated by prediction information PI may mean a two-dimensional distribution of the processed amount of the test work W_test.

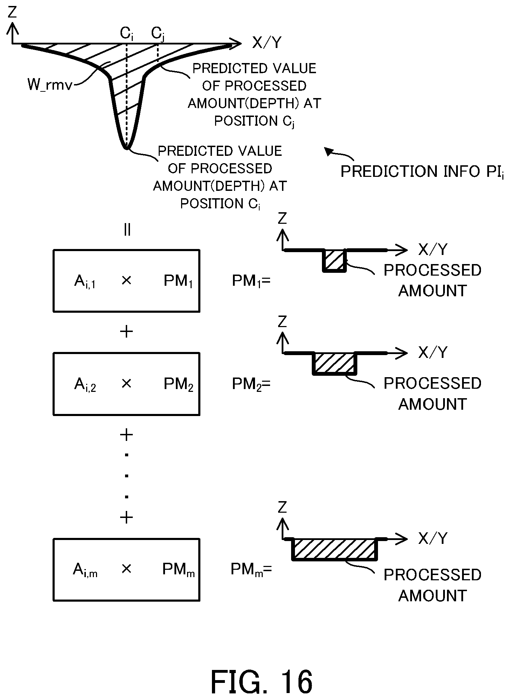

As one example, as illustrated in FIG. 16 that conceptually illustrates prediction information PIᵢ, the prediction information PIᵢ, which indicating the predicted value of the processed amount of the test work W_test in a case where the irradiation target position Cᵢ is irradiated with the processing light EL a unit number of times, may indicate not only the predicted value of the processed amount at the irradiation target position Cᵢ in a case where the irradiation target position Cᵢ is irradiated with the processing light EL a unit number of times, but also the predicted value of the processed amount at the irradiation target position Cⱼ (wherein j is a variable number representing an integer number that is equal to or larger than 1, that is equal to or smaller than n, and that is different from the variable number i), which is different from the irradiation target position Cᵢ, in a case where the irradiation target position Cᵢ is irradiated with the processing light EL a unit number of times. Namely, the prediction information PIi may include information that is usable to predict both the predicted value of the processed amount at the irradiation target position Cᵢ in a case where the irradiation target position Cᵢ is irradiated with the processing light EL a unit number of times and the predicted value of the processed amount at the irradiation target position Cⱼ in a case where the irradiation target position Cᵢ is irradiated with the processing light EL a unit number of times.

For example, the prediction information PI₁ may indicate not only the predicted value of the processed amount at the irradiation target position C₁ in a case where the irradiation target position C₁ is irradiated with the processing light EL a unit number of times but also the predicted value of the processed amount at each of the irradiation target positions C₂ to Cₙ in a case where the irradiation target position C₁ is irradiated with the processing light EL a unit number of times. For example, the prediction information PI₂ may indicate not only the predicted value of the processed amount at the irradiation target position C₂ in a case where the irradiation target position C₂ is irradiated with the processing light EL a unit number of times but also the predicted value of the processed amount at each of the irradiation target positions C₁ and C₃ to Cₙ in a case where the irradiation target position C₂ is irradiated with the processing light EL a unit number of times. For example, the prediction information PIᵢ may indicate not only the predicted value of the processed amount at the irradiation target position Cᵢ in a case where the irradiation target position Cᵢ is irradiated with the processing light EL a unit number of times but also the predicted value of the processed amount at each of the irradiation target positions C₁ to Cᵢ₋₁ and Cᵢ₊₁ to Cₙ in a case where the irradiation target position Cᵢ is irradiated with the processing light EL a unit number of times. For example, the prediction information PIₙ may indicate not only the predicted value of the processed amount at the irradiation target position Cₙ in a case where the irradiation target position Cᵢ is irradiated with the processing light EL a unit number of times but also the predicted value of the processed amount at each of the irradiation target positions C₁ to Cₙ₋₁ in a case where the irradiation target position Cₙ is irradiated with the processing light EL a unit number of times.

One reason why the prediction information Pi indicates the distribution of the processed amount of the test work W_test is that the processing light EL irradiated onto the irradiation target position Cᵢ may process not only a part of the test work W_test positioned at the irradiation target position Cᵢ but also other part of the test work W_test positioned at the irradiation target position Cⱼ. Specifically, in a case where the processing light EL is irradiated onto the irradiation target position Cᵢ and a fluence of the processing light EL at the irradiation target position Cⱼ is higher than a lower threshold value of the fluence that allows the test work W_test to be processed, the processing light EL irradiated onto the irradiation target position Cᵢ processes other part of the test work W_test positioned at the irradiation target position Cⱼ.

Note that the state in which the processing light EL is irradiated onto the irradiation target position Cᵢ may mean a state in which a center of a beam spot of the processing light EL is positioned at the irradiation target position Cᵢ or near the irradiation target position Cᵢ. The beam spot of the processing light EL may mean an area onto which the processing light EL whose intensity is higher than a predetermined intensity threshold value is irradiated. The beam spot of the processing light EL may mean an area that corresponds to a full width at half maximum (FWHM) of the intensity distribution (for example, a Gaussian distribution) of the processing light EL.

In a case where the prediction information PIᵢ indicates the distribution of the processed amount of the test work W_test, the prediction information PIᵢ may be considered to indicate at least one of a width and a depth of the removal target part W_rmv, which is removed from the test work W_test in a case where the irradiation target position Cᵢ is irradiated with the processing light EL a unit number of times. Namely, the prediction information PIᵢ may be considered to include information of at least one of the width and the depth of the removal target part W_rmv, which is removed from the test work W_test in a case where the irradiation target position Cᵢ is irradiated with the processing light EL a unit number of times. Note that the width of the removal target part W_rmv may mean a size of the removal target part W_rmv in at least one of the X-axis direction and the Y-axis direction. The depth of the removal target part W_rmv may mean a size of the removal target part W_rmv in the Z-axis direction. The depth of the removal target part W_rmv may be synonymous with the processed amount.

In a case where the model information LM includes the prediction information PI, the machine learning for generating (updating) the model information LM may include the machine learning for generating (updating) the prediction information PI included in the model information LM. Namely, the model generation unit 211 may generate the model information LM by performing the machine learning for generating the prediction information PI included in the model information LM. For example, the model generation unit 211 may generate the model information LM by performing the machine learning for generating the prediction information PI so that the loss determined based on the plurality of test work shape differences Δs_test described above is smaller (alternatively, is minimized).

The prediction information PIᵢ may include model parameter A for defining the distribution of the processed amount of the test work W_test. For example, as illustrated in FIG. 16, the prediction information PIᵢ may include m (wherein m is a constant value representing an integer number that is equal to or larger than 1) model parameters A (specifically, model parameters A_{i,1} to A_{i,m}) that are multiplied by m basis functions PM (specifically, basis functions PM₁ to PMₘ), respectively. Each of the basis functions PMᵢ to PMₘ may represent a unit processed amount of the test workpiece W_test. Especially, the basis functions PM₁ to PMₘ may represent m different unit processed amounts, respectively. In the example illustrated in FIG. 16, the basis functions PM₁ to PMₘ represent m unit processed amounts that are different in size (namely, the processed amount) in a width direction (namely, at least one of the X-axis direction and the Y-axis direction). However, the basis functions PM₁ to PMₘ may represent m unit processed amounts that are different in a size (namely, the processed amount) in a depth direction (namely, the Z-axis direction). In this case, the prediction information PIᵢ may indicate, as the distribution of the processed amount of the test workpiece W_test, the distribution of the processed amount obtained by summing the products of the basis functions PM₁ to PMₘ and the model parameters A_{i,1} to A_{i,m}. Namely, the prediction information PIᵢ may indicate, as the distribution of the processed amount of the test workpiece W_test, the distribution of the processed amount obtained by summing the product of the basis function PM₁ and the model parameters A_{i,1}, the product of the basis function PM₂ and the model parameters A_{i,2}, ..., and the product of the basis function PMₘ and the model parameters A_{i,m}.

In a case where the prediction information PI includes the model parameter A, the machine learning for generating (updating) the model information LM may include the machine learning for generating (updating) the model parameter A included in the prediction information PI. Namely, model generation unit 211 may generate the model information LM by performing the machine learning for generating the model parameter A included in prediction information PI. For example, the model generation unit 211 may generate the model information LM by performing the machine learning for generating the model parameter A so that the loss determined based on the plurality of test work shape differences Δs_test described above is smaller (alternatively, is minimized).

In a case where the model information LM includes the prediction information PI (namely, the prediction information PI₁ to PIₙ), a relationship that the test pulse number × the prediction information PI = the predicted result of the test work shape is substantially established between the test pulse number and the predicted result of the test work shape as illustrated in FIG. 15. Specifically, as illustrated in FIG. 15, the model generation unit 211 may multiply the prediction information PIᵢ by the test pulse number, which is the number of times which the irradiation target position Cᵢ is irradiated with the processing light EL to predict the processed amount of the test workpiece W_test in a case where the irradiation target position Cᵢ is irradiated with the processing light EL a number of times that is the same as the test pulse number. The model generation unit 211 may repeat the same operation for the number of the irradiation target positions C to predict the processed amount of the test workpiece W_test in a case where each of the irradiation target positions C₁ to Cₙ is irradiated with the processing light EL a number of times that is the same as the test pulse number. Then, the model generation unit 211 may predict the processed amount (namely, the test work shape) of the test work W_test by summing n predicted values of the processed amounts of the test work W_test corresponding to the irradiation target position C₁ to Cₙ, respectively. As a result, the model generation unit 211 may generate the model information LM by calculating the test workpiece shape difference Δs_test, which is the difference between the predicted result of the test workpiece shape and the actual measured result of the test workpiece shape (namely, the test workpiece shape information), and performing the machine learning so that the loss determined based on the calculated test workpiece shape difference Δs_test is smaller (alternatively, is minimized).

Due to the machine learning described above, the model generation unit 211 can generate the model information LM that properly indicates the relationship between the test pulse number and the test workpiece shape. Namely, the model generation unit 211 can acquire the model information LM that properly indicates the relationship between the test pulse number and the test workpiece shape.

Again in FIG. 12, after the model information LM is generated at the step S15, the control data generation unit 212 of the data generation server 2 calculates (in other words, generates) the target pulse number based on the model information LM generated at the step S15 (a step S21). Namely, the control data generation unit 212 generates the target pulse number information indicating the target pulse number based on the model information LM generated at the step S15 (the step S21).

Specifically, the test pulse number indicates the number of times which each of the irradiation target position C₁ to C_{N} is irradiated with the processing light EL, as with the target pulse number. Therefore, it is expected that the model information LM that properly indicates a relationship between the test pulse number and the test workpiece shape also indicates the relationship between the target pulse number and the shape of the processing target workpiece W_target processed based on the target pulse number. Therefore, the model generation unit 211 may be considered to substantially generate the model information LM that properly indicates the relationship between the target pulse number and the shape of the processing target workpiece W_target processed based on the target pulse number by generating the model information LM that properly indicates the relationship between the test pulse number and the test workpiece shape. In other words, it is expected that the model information LM indicates the relationship between the target pulse number and the processing target shape. Therefore, the model generation unit 211 may be considered to substantially generate, the model information LM that properly indicates the relationship between the target pulse number and the processing target shape by generating the model information LM that properly indicates the relationship between the test pulse number and the test workpiece shape.

Note that it is expected that the prediction information PI, which is included in the model information LM generated by the machine learning, also indicates the predicted value of the processed amount of the processing target workpiece W_target in a case where the irradiation target position C is irradiated with the processing light EL a unit number of times. Namely, the model generation unit 211 may generate the model information LM, which includes the prediction information PI indicating the predicted value of the processed amount of the processing target workpiece W_target in a case where the irradiation target position C is irradiated with the processing light EL a unit number of times, by generating the model information LM including the prediction information PI indicating the predicted value of the processed amount of the test workpiece W_test in a case where the irradiation target position C is irradiated with the processing light EL a unit number of times.

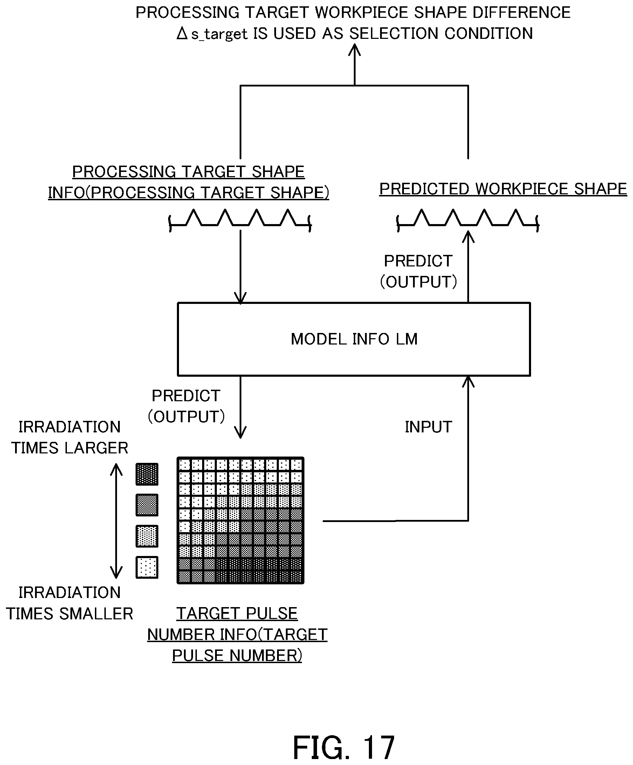

Since the model information LM, which indicate the relationship between the test pulse number and the test workpiece shape, may be considered to indicate the relationship between the target pulse number and the processing target shape in this manner, the model information LM may be used to predict the target pulse number, which is recommended to be used to process the processing target workpiece W_target so that the shape of the processing target workpiece W_target becomes the desired processing target shape, from the processing target shape that is the target value of the shape of the processing target workpiece W_target after processing. Namely, the model information LM may be used to predict the target pulse number, which is recommended to be used to process the processing target workpiece W_target so that the shape of the processing target workpiece W_target becomes the desired processing target shape, from processing target shape information in a situation where the processing target shape information related to the processing target shape is known (namely, the processing target shape is already set). Therefore, the model information LM may be regarded as prediction information that is usable to generate the target pulse number information (namely, to predict the target pulse number), which is unknown information, from the processing target shape information, which is known information. Therefore, at the step S21, the control data generation unit 212 calculates the target pulse number based on the model information LM and the processing target shape information that indicates the processing target shape. Namely, the control data generation unit 212 predicts the target pulse number, which is recommended to be used to process the processing target workpiece W_target so that the shape of the processing target workpiece W_target becomes the desired processing target shape, by using the processing target shape information and the model information LM. In other words, the control data generation unit 212 calculates the target pulse number based on the model information LM and the processing target shape information that indicates the processing target shape, by considering that the model information LM, which indicates the relationship between the test pulse number and the test workpiece shape, indicates the relationship between the target pulse number and the processing target shape. For example, as illustrated in FIG. 17, the control data generation unit 212 may calculate the target pulse number as an output (predicted result) of the model information LM by inputting the processing target shape information indicating the processing target shape into the model information LM.

Here, it is unlikely that there is only one type of target pulse number that is recommended to be used to process the processing target workpiece W_target so that the shape of the processing target workpiece W_target becomes the desired processing target shape. Namely, there is a possibility that that the shape of the processing target workpiece W_target, which is processed by using one target pulse number, becomes the desired target shape and the shape of the processing target workpiece W_target, which is processed by using a target pulse number different from the one also becomes the desired target shape. Therefore, at the step S21, the control data generation unit 212 generates a plurality of target pulse number information that indicates different target pulse numbers, respectively. However, at the step S21, the control data generation unit 212 may not generate the plurality of target pulse number information. At the step S21, the control data generation unit 212 may generate a single target pulse number information.

Again in FIG. 12, then, the control data generation unit 212 predicts, based on the target pulse number information generated at the step S21 and the model information LM, the shape of the processing target workpiece W_target after processing assuming that the processing target workpiece W_target is processed by using the target pulse number indicated by the target pulse number information (a step S22). Note that the shape of the processing target workpiece W_target predicted at the step S22 is referred to as a predicted workpiece shape. Especially, since the plurality of target pulse number information are generated at the step S21, the control data generation unit 212 predicts a plurality of predicted workpiece shapes that correspond to the plurality of target pulse number information, respectively, at the step S22.

Specifically, as described above, since the model information LM may be considered to indicate the relationship between the target pulse number and the processing target shape, the model information LM may be used to predict, from the target pulse number, the shape of the processing target workpiece W_target after processing assuming that the processing target workpiece W_target is processed by using the target pulse number indicated by the target pulse number information (in this case, the processing target shape corresponding to the target pulse number). Namely, the model information LM may be used to predict, from the target pulse number information, the shape of the processing target workpiece W_target after processing assuming that each of the irradiation target positions C₁ to C_{N} is irradiated with the processing light EL a number of times that is the same as the target pulse number in a situation where the target pulse number information related to the target pulse number is known (namely, the target pulse number is already set). Therefore, the model information LM may be regarded as prediction information that is usable to predict the shape of the processing target workpiece W_target after processing, which is unknown information, from the target pulse number information, which is known information. Therefore, at the step S22, the control data generation unit 212 may predict the predicted workpiece shape based on model information LM and the target pulse number information generated at the step S21. In other words, at the step S22, the control data generation unit 212 can predict the predicted workpiece shape based on the target pulse number information and the model information LM by considering that the model information LM, which indicates the relationship between the test pulse number and the test workpiece shape, indicates the relationship between the target pulse number and the processing target shape. For example, as illustrated in FIG. 17, the control data generation unit 212 may calculate the predicted workpiece shape as the output (the predicted result) of the model information LM by inputting the target pulse number information indicating the target pulse number into the model information LM.

Again in FIG. 12, then, the control data generation unit 212 selects one target pulse number information, which satisfies a predetermined selection condition based on the predicted workpiece shape predicted at the step S22, from the plurality of target pulse number information generated at the step S21 (a step S23). For example, as illustrated in FIG. 17, the control data generation unit 212 may select one target pulse number information that satisfies a predetermined selection condition based on a processing target workpiece shape difference Δ_target, which is a difference between the predicted workpiece shape and the processing target shape. As one example, the control data generation unit 212 may select, as one target pulse number information satisfying the predetermined selection condition, one target pulse number information corresponding to the predicted workpiece shape satisfying a condition that the processing target workpiece shape difference Δ_target is the smallest. Namely, the control data generation unit 212 may select, as one target pulse number information satisfying the predetermined selection condition, one target pulse number information by which it is predicted that the shape of the processing target workpiece W_target after processing is the closest to the processing target shape assuming that the processing target workpiece W_target is processed by using the target pulse number indicated by the target pulse number information, from the plurality of target pulse number information. In this case, an operation for selecting one target pulse number information from the plural target pulse number information may be considered to be equivalent to an operation for generating one target pulse number information so that the predicted workpiece shape is closer to the processing target shape (namely, so that the processing target workpiece shape difference Δ_target, which is the difference between the predicted workpiece shape and the processing target shape, becomes smaller).

Note that the control data generation unit 212 may select one target pulse number information, which satisfies other selection condition that is different from the selection condition based on the processing target workpiece shape difference Δ_target, from the plurality of target pulse number information. For example, as described above, the processing apparatus 1 forms the riblet structure on the processing target workpiece W_target by processing the processing target workpiece W_target. In this case, the control data generation unit 212 may select one target pulse number information, which satisfies a selection condition based on a characteristic of the riblet structure formed in a case where the processing target workpiece W_target is processed by using the target pulse number indicated by the target pulse number information. In this case, the control data generation unit 212 may calculate the characteristic of the riblet structure from the predicted workpiece shape predicted at the step S22 (namely, a predicted result of a shape of the riblet structure formed in a case where the processing target workpiece W_target is processed by using the target pulse number indicated by the target pulse number information), and select one target pulse number information, which satisfies the selection condition based on the characteristic of the riblet structure, based on the calculated characteristic of the riblet structure. For example, as described above, the riblet structure has the effect of reducing the resistance of the surface of the processing target workpiece W_target to the fluid. In this case, the characteristic of the riblet structure may include a resistance reduction effect due to the riblet structure. In this case, the control data generation unit 212 may select one target pulse number information, which satisfies a condition that the resistance reduction effect due to the riblet structure, which is formed in a case where the processing target workpiece W_target is processed by using the target pulse number indicated by the target pulse number information, is the highest, from the plurality of target pulse number information.

Note that the control data generation unit 212 may not perform the operation from the step S22 to the step S23 in a case where the control data generation unit 212 may not generate the plurality of target pulse number information (namely, generates single target pulse number information) at the step S21. In this case, the single target pulse number information generated at the step S21 may be used as the one target pulse number information selected at the step S23.

Then, the processing target workpiece W_target is processed based on the target pulse number information selected at the step S23 (a step S24). Specifically, the control data generation unit 212 controls the processing apparatus 1 to process the test workpiece W_test based on the target pulse number information. For example, the control data generation unit 212 may transmit the target pulse number information as the control data to the processing apparatus 1. The processing apparatus 1 (especially, the control unit 14) may generate the processing control information for controlling the processing apparatus 1 based on the target pulse number information transmitted from the data generation server 2. For example, the control unit 14 may generate the processing control information for controlling the processing apparatus 1 to process the processing target workpiece W_target so that the shape of the processing target workpiece W_target becomes the desired processing target shape. Then, the processing apparatus 1 may process the processing target workpiece W_target based on the generated processing control information.

After the processing target workpiece W_target is processed, the shape of the processed processing target workpiece W_target is measured (the step S24). Namely, a processing target workpiece shape, which is the shape of the processing target workpiece W_target after the processing target workpiece W_target is processed based on the target pulse number information selected at the step S23, is measured (the step S24). For example, the processing apparatus 1 may measure the workpiece shape by using the measurement unit 12. Then, processing target workpiece shape information (processing shape information), which indicates a measured result of the processing target workpiece shape by the measurement unit 12, may be transmitted from the processing apparatus 1 to the data generation server 2 through the communication network 4. The model generation unit 211 of the data generation server 2 may acquire the processing target workpiece shape information that indicates the measured result of the processing target workpiece shape by the measurement unit 12.

Then, the control data generation unit 212 determines whether or not the processing target workpiece shape satisfies a predetermined standard (a step S25). For example, in a case where a difference between the processing target workpiece shape and the processing target shape is smaller than an allowable amount, it is likely that the processing target workpiece W_target has been processed properly based on the target pulse number information. Therefore, in this case, the control data generation unit 212 may determine that the processing target workpiece shape satisfies the predetermined standard. On the other hand, in a case where the difference between the processing target workpiece shape and the processing target shape is larger than the allowable amount, it is likely that the processing target workpiece W_target has not been processed properly based on the target pulse number information. Therefore, in this case, the control data generation unit 212 may determine that the processing target workpiece shape does not satisfy the predetermined standard.

In a case where it is determined as a result of the determination at the step S25 that the processing target workpiece shape satisfies the predetermined standard (the step S25: Yes), it is estimated that the target pulse number information selected at the step S25 is proper as the target pulse number information for processing the processing target workpiece W_target so that the shape of the processing target workpiece W_target becomes the target shape. Therefore, in this case, the control data generation unit 212 may generate the control data indicating the target pulse number information selected at the step S25, and output the generated control data to the processing apparatus 1.

In a case where it is determined as a result of the determination at the step S25 that the processing target workpiece shape does not satisfy the predetermined standard (the step S25: No), it is estimated that the target pulse number information selected at the step S25 is not proper as the target pulse number information for processing the processing target workpiece W_target so that the shape of the processing target workpiece W_target becomes the target shape. In this case, there is a possibility that the learning of the model information LM, which is used to generate the target pulse number information, is insufficient. Therefore, the data generation server 2 performs the operation at the step S15 again to perform the machine learning for generating (in this case, updating) the model information LM again. Especially, in a case where the machine learning is performed again, the model generation unit 211 may use, as new training data, data in which the target pulse number information selected at the step S23 is associated with the processing target workpiece shape information indicating the processing target workpiece shape measured at the step S24, in addition to the training data acquired by the operation from the step S11 to the step S13 (namely, the training data in which the test processing condition information is associated with the test workpiece shape information).

After the machine learning for generating (in this case, updating) the model information LM is performed again, the data generation server 2 performs the operation from the step S21 to the step S25 again. Namely, the control data generation unit 212 newly generates the target pulse number information based on the updated model information LM. Note that newly generating the target pulse number information may be considered to be equivalent to updating the target pulse number information (namely, updating the target pulse number indicated by the target pulse number information).

Here, since the model information LM is updated, it is expected that the target pulse number information generated based on the updated model information LM is likely to be more proper as the target pulse number information for processing the processing target workpiece W_target so that the shape of the processing target workpiece W_target becomes the predetermined target shape, compared to the target pulse number information generated based on the non-updated model information LM. Namely, i it is expected that the target pulse number information generated based on the updated model information LM is likely to be more proper as the target pulse number information for processing the processing target workpiece W_target so that the shape of the processing target workpiece W_target becomes the predetermined target shape, compared to the target pulse number information generated based on the non-updated model information LM.

In this case, in a case where the target pulse number information is generated based on the updated the model information LM, it is expected that the processing target workpiece shape difference Δ_target, which corresponds to one target pulse number information selected at the step S23, is smaller, compared to a case where the target pulse number information is generated based on the non-updated model information LM. Therefore, updating the model information LM and generating (in other words, updating) the target pulse number information based on the updated the model information LM may be considered to be equivalent to generating (in other words, updating) the target pulse number information so that the processing target workpiece shape difference Δ_target becomes smaller.

Furthermore, in a case where the target pulse number information is generated based on the updated model information LM, it is expected that it is more likely to be determined that the processing target workpiece shape satisfies the predetermined standard at the step S25, compared to a case where the target pulse number information is generated based on the non-updated model information LM. Namely, it is expected that the difference between the processing target workpiece shape and the target shape becomes smaller. Therefore, updating the model information LM and generating (in other words, updating) the target pulse number information based on the updated model information LM may be considered to be equivalent to generating (in other words, updating) the target pulse number information so that it is more likely to be determined that the processing target workpiece shape satisfies the predetermined standard (for example, the difference between the processing target workpiece shape and the target shape becomes smaller).

### (4) Technical Effect

As described above, in the present example embodiment, the data generation server 2 may calculate the target pulse number by using the model information LM that indicates the relationship between the number of times which each of the irradiation target positions C₁ to C_{N} with the processing light EL for processing the workpiece W and the shape of the workpiece W after processing. Therefore, a time required to calculate the target pulse number is reduced compared to a case where the model information LM is not used.

Specifically, in a case where the model information LM is not used, it is necessary for the operator of the processing system SYS to manually set the target pulse number. Furthermore, it is necessary to process the workpiece W based on the set target pulse number, to measure the shape of the processed workpiece W, and to evaluate based on the measured result of the shape of the workpiece W whether or not the target pulse number manually set by the operator is proper. Moreover, in a case where it is determined that the target pulse number manually set by the operator is not proper (namely, the shape of the processed workpiece W is different from the target shape), it is necessary for the operator to manually set the target pulse number again, and it is necessary to re-evaluate whether or not the newly set target pulse number is proper. Therefore, a time required to set the proper target pulse becomes significantly large.

On the other hand, in the present example embodiment, since the target pulse number is calculated by using the model information LM, it is not necessary for the operation to manually set the target pulse number. Furthermore, since the model information LM is generated by actually processing the test workpiece W_test and using the measured result of the shape of the actually processed test workpiece W_test, it is likely that the model information LM indicates the relationship between the target pulse number and the target shape of the workpiece W. Therefore, it is likely that the target pulse number calculated by using the model information LM is a proper target pulse number. Therefore, it is less likely that it is necessary to set the target pulse number again, compared to a case where the model information LM is not used. Furthermore, the test workpiece W_test is processed and the shape of the processed test workpiece W_test is measured in order to acquire the training data that tis used to generate the model information LM,. However, since the processing and the measurement of the test workpiece W_test are the processing and the measurement performed to acquire the training data, the number of times which the processing and the measurement of the test workpiece W_test are performed is smaller than the number of times which the processing and the measurement are performed to evaluate whether or not the target pulse number is proper. For these reasons, the time required to set the target pulse number is reduced.

### (5) Other Modified Example

In the above-described description, the data generation server 2 generates the model information LM by performing the machine learning. However, the data generation server 2 may generate the model information LM without performing the machine learning. For example, the data generation server 2 may generate the model information LM, which indicates the relationship between test processing condition information and the test workpiece shape information, based on the test processing condition information and the test workpiece shape information.

In the above-described description, the data generation server 2 generates the model information LM based on the test processing condition information and test workpiece shape information, and then generates the target pulse number information based on the generated model information LM and the processing target shape information. However, the data generation server 2 may generate the target pulse number information without generating the model information LM. For example, the data generation server 2 may generate the target pulse number information based on the test processing condition information, the test workpiece shape information, and the processing target shape information, without generating the model information LM.

In the above-described description, the prediction information PI included in the model information LM indicates, as the predicted value of the processed amount of the workpiece W in a case where the irradiation target position C is irradiated with the processing light EL for a unit number of times, the predicted value of the processed amount of the workpiece W in a case where the irradiation target position C is irradiated with the processing light EL once. Namely, in the above-described description, an example in which the unit number of times is one is described. However, the unit number of times may be two times or more times. In this case, the target pulse number may indicate the number of times which a unit irradiation operation, which irradiates the irradiation target position C with the processing light EL for a unit number of times, should be performed. Specifically, the target pulse number information may indicate the target pulse number that is the number of times which a first unit irradiation operation, which irradiates the irradiation target position C₁ with the processing light EL for a unit number of times, should be performed, the target pulse number that is the number of times which a second unit irradiation operation, which irradiates the irradiation target position C₂ with the processing light EL for a unit number of times, should be performed, ..., and the target pulse number that is the number of times which a n-th unit irradiation operation, which irradiates the irradiation target position Cₙ with the processing light EL for a unit number of times, should be performed.

In the above-described description, the data generation server 2 generates the control data indicating the target pulse number. However, the data generation server 2 may generate the control data that is different from the control data indicating the target pulse number. For example, the data generation server 2 may generate the control data specifying any processing condition (processing recipe) of the processing apparatus 1. In this case, the data generation server 2 may generate the model information LM, which indicates a relationship between any processing condition for processing the workpiece W and the shape of the workpiece W after processing, based on the test processing condition information indicating any processing condition and the test workpiece shape, and calculate a target values of any processing condition (a target processing condition, a processing target workpiece processing condition) based on the generated model information and the processing target shape information. Namely, the data generation server 2 may generate the control data indicating the target value of any processing condition (the target processing condition). The processing condition may include a condition (an irradiation condition) of the processing light EL that is irradiated onto the workpiece W. The irradiation condition may include at least one of a condition related to the intensity of the processing light EL, a condition related to the energy (for example, the pulse energy) of the processing light EL, a condition related to the number of times of the irradiation of the processing light EL, a condition related to the irradiation position of the processing light EL, and a condition related to a burst mode of the processing light EL, for example. Note that the burst mode may mean an operation mode in which each pulse of the processing light EL is allowed to be divided into a desired number of pulses as described in JP2016-524864A, for example. In this case, the condition related to the burst mode may include a condition related to the number of division of the pulsed light. Moreover, the target pulse number, which is the number of times which each of the irradiation target positions C₁ to C_{N} is irradiated with the processing light EL, may be considered to be equivalent to the condition related to the number of the irradiation and the irradiation position of the processing light EL. In this case, the control data indicating the target pulse number may be regarded as the control data specifying the processing condition. The processing condition may include a movement condition of at least one of the processing head 112 and the stage 132. The movement condition may include at least one of a condition related to a movement speed, a movement distance, a movement direction, and a movement timing, for example.

In the above-described description, the processing apparatus 1 processes the workpiece W by irradiating the workpiece W with a processing beam including a single processing light EL. However, the processing apparatus 1 may process the workpiece W by irradiating the workpiece W with a processing beam including a plurality of processing lights EL. Even in this case, the data generation server 2 may generate the control data by performing the data generation operation illustrated in FIG. 12. However, in this case, the model information LM may indicate the relationship between the shape of the workpiece W after processing and the number of times which each of the irradiation target positions C₁ to C_{N} is irradiated with the processing beam including the plurality of processing lights EL to process the workpiece W. The prediction information PI included in the model information LM may indicate the predicted value of the processed amount of the test workpiece W_test in a case where the irradiation target position C is irradiated with the processing beam including the plurality of processing lights EL for a unit number of times.

In a case where the processing apparatus 1 processes the workpiece W by irradiating the workpiece W with the processing beam including the plurality of processing lights EL, the processing apparatus 1 may process the workpiece W by forming an interference fringe, which is generated by an interference between the plurality of processing lights EL, on the surface of the workpiece W. Note that one example of the processing apparatus that processes the workpiece W by forming the interference fringe on the surface of the workpiece W is disclosed in US2022/0258289A1. Even in this case, the data generation server 2 may generate the control data by performing the data generation operation illustrated in FIG. 12. However, in this case, the model information LM may indicate the relationship between the shape of the workpiece W after processing the number of times which the interference fringe is formed at each of the irradiation target positions C₁ to C_{N} to process the workpiece W. The prediction information PI included in the model information LM may indicate the predicted value of the processed amount of the test workpiece W_test in a case where interference fringe is formed at the irradiation target position C for a unit number of times.

In the above-described description, the processing apparatus 1 processes the workpiece W by irradiating the workpiece W with the processing light EL. However, the processing apparatus 1 may process the workpiece W by irradiating the workpiece W with any energy beam. In this case, the processing apparatus 1 may include a beam irradiation apparatus that is configured to emit any energy beam in addition to or instead of the processing light source 111. At least one of a charged particle beam, an electromagnetic wave and the like is one example of any energy beam. A least one of an electron beam, an ion beam and the like is one example of the charged particle beam.

In the above-described description, the measurement unit 12 is provided separately from the processing unit 11. However, the measurement unit 12 may be integrated with the processing unit 11, and may measure the workpiece W through a condensing optical system (the fθ lens 1123) that condenses the processing light EL of the processing unit 11. Such a processing and measurement apparatus is disclosed in WO2021/024480A1, for example.

In the above-described description, the information related to the processing light EL included in the reference information may include information related to the light intensity distribution or the fluence distribution of the processing light EL in the propagating direction of the processing light EL (in other words, in the irradiation direction).

In the above-described example embodiment, the data generation server 2 may calculate the light penetration depth from a processed result of the workpiece W in addition to or instead of calculating the light penetration depth from the processed result of the workpiece Wt for testing. In this case, the data generation server 2 may calculate the light penetration depth by processing and measuring a part of the workpiece W that is expected to be removed, and may acquire information related to the initial shape of the workpiece W by measuring the workpiece W on which the subtractive manufacturing has been performed to calculate the light penetration depth.

In the above-described description, the data generation server 2 uses the Response Surface Method to determine the optimal processing condition, however, it is not limited to the Response Surface Method, and other method such as Design of Experiments, a machine learning, a Bayesian inference and the like may be used, for example.

In the above-described description, the stage unit 13 may include a plurality of stages 132.

Regarding the above described example embodiment, below described Supplementary notes are further disclosed.

### [Supplementary Note 1]

A data generation method that generates control data for controlling a processing apparatus, which is configured to perform a subtractive manufacturing on a processing target workpiece by irradiating a pulse energy beam onto a surface of the processing target workpiece, wherein
the data generation method includes:
inputting first information related to a target shape whose height varies in at least a one-dimensional direction, one or more second information related to a processing condition for processing the target shape, and one or more pieces of third information related to a height profile in the at least one-dimensional direction of an object processed by using the processing condition; and
outputting one or more processing conditions, which is acquired by inputting the first information into a machine learning model that is trained with the one or more second information and the one or more third information, and a processing shape predicted result corresponding to each of the one or more processing conditions.

The features of each example embodiment described above may be appropriately combined with each other. A part of the features of each example embodiment described above may not be used. The feature of each example embodiment described above may be appropriately replaced with the feature of another example embodiment. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a data generation method, a cloud system, a data generation apparatus, a cloud system, a data generation apparatus, a computer program, a recording medium, and a processing apparatus, which involve such changes, are also intended to be within the technical scope of the present invention.

### Description of Reference Codes

- SYS: processing system
- 1: processing apparatus
- 11: processing unit
- 12: measurement unit
- 13: stage unit
- 14: control apparatus
- 2: data generation server
- 21: computing apparatus
- 211: model generation unit
- 212: control data generation unit
- 3: client termina apparatus
- EL: processing light
- W: workpiece
- W_test: test workpiece
- W_target: processing target workpiece
- C: irradiation target position
- LM: model information

## Claims

1. A data generation method that generates control data for controlling a processing apparatus, which is configured to perform a subtractive manufacturing on a processing target workpiece by irradiating a pulse energy beam onto a surface of the processing target workpiece, wherein
the data generation method comprises:
acquiring test processing condition information including a pulse number of the pulse energy beam, which should be irradiated onto each of a plurality of irradiation positions of a test workpiece to process the test workpiece so that its shape becomes a target shape;
measuring a test workpiece shape that is a shape of the test workpiece after processing the test workpiece based on the test processing condition information; and
calculating a target pulse number of the pulse energy beam, which should be irradiated onto a plurality of irradiation positions of the processing target workpiece, based on the test processing condition information, the test workpiece shape, and prediction information of a shape of a part that is processed by an irradiation of the pulse energy beam with a unit number of pulses.

2. The data generation method according to claim 1, wherein
the prediction information includes information of at least one of a width and a depth of the part that is processed by the pulse energy beam with the unit number of pulses.

3. The data generation method according to claim 1 or 2, wherein
the prediction information indicates a predicted value of a processed amount of the test workpiece in a case where the pulse energy beam is irradiated for the unit number of pulses.

4. The data generation method according to claim 3, wherein
the prediction information includes a predicted value of a processed amount at a first test position and a predicted value of a processed amount at a second test position of the test workpiece in a case where the pulse energy beam is irradiated onto the first test position and the second test position, which is different from the first test position, for the unit number of pulses.

5. The data generation method according to claim 4, wherein
the target pulse number is calculated by using a difference between the target shape and a predicted result of the shape of the processing target workpiece based on the prediction information.

6. The data generation method according to any one of claims 1 to 5 comprising generating the prediction information so that a difference between the test workpiece shape and a predicted result of the shape of the test workpiece based on the prediction information becomes smaller.

7. The data generation method according to any one of claims 1 to 6, wherein
the calculating the target pulse number includes:
generating the prediction information based on the test processing condition information and the test workpiece shape; and
calculating the target pulse number based on the prediction information.

8. The data generation method according to any one of claims 1 to 7, wherein
the generating the target pulse number further comprises generating target pulse number information, which indicates the target pulse number of the pulse energy beam that should be irradiated onto each of the plurality of irradiation positions so that the shape of the processing target workpiece becomes the target shape by the subtractive manufacturing, based on the target shape.

9. The data generation method according to any one of claims 1 to 8 further comprising predicting a predicted shape of the test workpiece based on the test processing condition information, wherein
the prediction information includes a model parameter, and
the model parameter is generated so that a difference between the test workpiece shape and the predicted shape becomes smaller.

10. The data generation method according to claim 9 comprising updating the model parameter so that a difference between the predicted shape and the target shape becomes smaller, wherein
the predicting the predicted shape is predicting the shape of the test workpiece in a case where the subtractive manufacturing is performed by irradiating the pulse energy beam onto the test workpiece, based on the prediction information.

11. The data generation method according to claim 9 or 10, wherein
the generating the target pulse number includes generating the target pulse number based on the target shape and the prediction information by considering that a relationship between the shape of the test workpiece and a test pulse number indicates a relationship between the target shape and the target pulse number.

12. The data generation method according to any one of claims 1 to 8, wherein
the generating the target pulse number includes generating the target pulse number information so that a predicted shape of the shape of the processing target workpiece, which is predicted from the prediction information, is closer to the target shape assuming that the subtractive manufacturing is performed by irradiating the pulse energy beam onto each of the plurality of irradiation positions for a number of pulses indicated by the target pulse number.

13. The data generation method according to any one of claims 9 to 12, wherein
the prediction information includes information that is usable for predicting a predicted value of a processed amount at a first irradiation position and a predicted value of a processed amount at a position different from the first irradiation position, as a predicted value of a processed amount of the test workpiece in a case where the pulse energy beam is irradiated onto the first irradiation position of the plurality of irradiation positions for the unit number of pulses.

14. The data generation method according to claim 13, wherein
the prediction information includes information that is usable for predicting a predicted value of a processed amount at a second irradiation position and a predicted value of a processed amount at a position different from the second irradiation position, as a predicted value of a processed amount of the test workpiece in a case where the pulse energy beam is irradiated onto the second irradiation position, which is different from the first irradiation position, of the plurality of irradiation positions for the unit number of pulses.

15. The data generation method according to any one of claims 9 to 14, wherein
the generating the target pulse number includes generating at least one target pulse number information.

16. The data generation method according to claim 15, wherein
the generating the at least one target pulse number information includes:
generating a plurality of target pulse number information based on the prediction information and the target shape; and
selecting, as the at least one target pulse number information, at least one target pulse information that satisfies a predetermined selection condition from among the plurality of target pulse number information.

17. The data generation method according to claim 16, wherein
the selection condition includes a first condition related to a difference between a predicted value of the shape of the processing target workpiece, which is predicted from the prediction information assuming that the subtractive manufacturing is performed by irradiating the pulse energy beam onto each of the plurality of irradiation positions for a number of pulses indicated by the target pulse number information, and the target shape.

18. The data generation method according to claim 16 or 17, wherein
the processing apparatus forms a riblet structure, by which a resistance of the surface of the processing target workpiece to a fluid is reducible, on the surface of the processing target workpiece by performing the subtractive manufacturing on the processing target workpiece, and
the selection condition includes a second condition related to a characteristic of the riblet structure, which is formed on the surface of the processing target workpiece assuming that the subtractive manufacturing is performed by irradiating the pulse energy beam onto each of the plurality of irradiation positions for a number of pulses indicated by the target pulse number information.

19. The data generation method according to any one of claims 1 to 18, wherein
the test workpiece is a first test workpiece, the test processing condition information is first test processing condition information, and the test workpiece shape is a first test workpiece shape,
the data generation method comprises:
acquiring second test processing condition information including a pulse number of the pulse energy beam, which should be irradiated onto each of a plurality of irradiation positions of a second test workpiece that is different from the first test workpiece;
irradiating the pulse energy beam onto the second test workpiece based on the second test processing condition information; and
measuring a second test workpiece shape related to a shape of the second test workpiece on which a processing of the second workpiece has been performed by the pulse energy beam, and
the prediction information is generated based on the second test processing condition information and the second test workpiece shape.

20. A data generation method that generates control data for controlling a processing apparatus, which is configured to perform a subtractive manufacturing on a processing target workpiece by irradiating a pulse energy beam onto a surface of the processing target workpiece, wherein
the data generation method comprises:
inputting test processing condition information indicating a pulse number of the pulse energy beam, which should be irradiated onto each of a plurality of irradiation positions of a test workpiece for processing the test workpiece so that its shape becomes a target shape;
measuring a test workpiece shape related to a shape of the test workpiece, which has been processed by the pulse energy beam, based on the test processing condition information;
performing a machine learning for generating model information, which includes prediction information of a shape processed by the pulse energy beam with a unit number of pulses, based on the test processing condition information and the test workpiece shape; and
calculating a target pulse number of the pulse energy beam, which should be irradiated onto a plurality of irradiation positions of the processing target workpiece, based on the model information generated by the machine learning and the target shape.

21. The data generation method according to claim 20, wherein
the model information includes information of at least one of a width and a depth of a part that is processed by the pulse energy beam with the unit number of pulses.

22. The data generation method according to claim 20 or 21, wherein
the model information indicates a predicted value of a processed amount of the test workpiece in a case where the pulse energy beam is irradiated for the unit number of pulses.

23. The data generation method according to claim 22, wherein
the model information includes a predicted value of a processed amount at a first test position and a predicted value of a processed amount at a second test position of the test workpiece in a case where the pulse energy beam is irradiated onto the first test position and the second test position, which is different from the first test position, for the unit number of pulses.

24. The data generation method according to claim 23, wherein
the target pulse number is calculated by using a difference between the target shape and a predicted result of the shape of the processing target workpiece based on the model information.

25. The data generation method according to any one of claims 20 to 24, comprising generating the model information so that a difference between the test workpiece shape and a predicted result of the shape of the test workpiece based on the model information becomes smaller.

26. The data generation method according to any one of claims 20 to 25, wherein
the calculating the target pulse number includes:
generating the model information based on the test processing condition information and the test workpiece shape; and
calculating the target pulse number based on the model information.

27. The data generation method according to any one of claims 20 to 26, wherein
the generating the target pulse number further comprises generating target pulse number information, which indicates the target pulse number of the pulse energy beam that should be irradiated onto each of the plurality of irradiation positions so that the shape of the processing target workpiece becomes the target shape by the subtractive manufacturing, based on the target shape.

28. The data generation method according to any one of claims 20 to 27, further comprising predicting a predicted shape of the test workpiece based on the test processing condition information, wherein
the model information includes a model parameter, and
the model parameter is generated so that a difference between the test workpiece shape and the predicted shape becomes smaller.

29. The data generation method according to claim 28 comprising updating the model parameter so that a difference between the predicted shape and the target shape becomes smaller, wherein
the predicting the predicted shape is predicting the shape of the test workpiece in a case where the subtractive manufacturing is performed by irradiating the pulse energy beam onto the test workpiece, based on the model information. .

30. The data generation method according to claim 28 or 29, wherein
the generating the target pulse number includes generating the target pulse number based on the target shape and the prediction information by considering that a relationship between the shape of the test workpiece and a test pulse number indicates a relationship between the target shape and the target pulse number.

31. The data generation method according to any one of claims 20 to 27, wherein
the generating the target pulse number includes generating the target pulse number information so that a predicted shape of the shape of the processing target workpiece, which is predicted from the model information, is closer to the target shape assuming that the subtractive manufacturing is performed by irradiating the pulse energy beam onto each of the plurality of irradiation positions for a number of pulses indicated by the target pulse number.

32. The data generation method according to any one of claims 28 to 31, wherein
the model information includes information that is usable for predicting a predicted value of a processed amount at a first irradiation position and a predicted value of a processed amount at a position different from the first irradiation position, as a predicted value of a processed amount of the test workpiece in a case where the pulse energy beam is irradiated onto the first irradiation position of the plurality of irradiation positions for the unit number of pulses.

33. The data generation method according to claim 32, wherein
the model information includes information that is usable for predicting a predicted value of a processed amount at a second irradiation position and a predicted value of a processed amount at a position different from the second irradiation position, as a predicted value of a processed amount of the test workpiece in a case where the pulse energy beam is irradiated onto the second irradiation position, which is different from the first irradiation position, of the plurality of irradiation positions for the unit number of pulses.

34. The data generation method according to any one of claims 28 to 33, wherein
the generating the target pulse number includes generating at least one target pulse number information.

35. The data generation method according to claim 34, wherein
the generating the at least one target pulse number information includes:
generating a plurality of target pulse number information based on the model information and the target shape; and
selecting, as the at least one target pulse number information, at least one target pulse information that satisfies a predetermined selection condition from among the plurality of target pulse number information.

36. The data generation method according to claim 35, wherein
the selection condition includes a first condition related to a difference between a predicted value of the shape of the processing target workpiece, which is predicted from the prediction information assuming that the subtractive manufacturing is performed by irradiating the pulse energy beam onto each of the plurality of irradiation positions for a number of pulses indicated by the target pulse number information, and the target shape.

37. The data generation method according to claim 35 or 36, wherein
the processing apparatus forms a riblet structure, by which a resistance of the surface of the processing target workpiece to a fluid is reducible, on the surface of the processing target workpiece by performing the subtractive manufacturing on the processing target workpiece, and
the selection condition includes a second condition related to a characteristic of the riblet structure, which is formed on the surface of the processing target workpiece assuming that the subtractive manufacturing is performed by irradiating the pulse energy beam onto each of the plurality of irradiation positions for a number of pulses indicated by the target pulse number information.

38. The data generation method according to any one of claims 20 to 37, wherein
the test workpiece is a first test workpiece, the test processing condition information is first test processing condition information, and the test workpiece shape is a first test workpiece shape,
the data generation method comprises:
acquiring second test processing condition information including a pulse number of the pulse energy beam, which should be irradiated onto each of a plurality of irradiation positions of a second test workpiece that is different from the first test workpiece;
irradiating the pulse energy beam onto the second test workpiece based on the second test processing condition information; and
measuring a second test workpiece shape related to a shape of the second test workpiece on which a processing of the second workpiece has been performed by the pulse energy beam, and
the model information is generated based on the second test processing condition information and the second test workpiece shape.

39. A data generation method that generates control data for controlling a processing apparatus, which is configured to perform a subtractive manufacturing on a processing target workpiece by irradiating a pulse energy beam onto a surface of the processing target workpiece, wherein
the data generation method comprises:
acquiring model information that indicates a relationship between target pulse number information, which indicates a target pulse number of the pulse energy beam that should be irradiated onto a plurality of irradiation positions of the processing target workpiece, and target shape information, which is related to a target shape of the processing target workpiece after the subtractive manufacturing; and
generating the target pulse number information as the control data based on the model information and the target shape information.

40. A data generation method that generates control data for controlling a processing apparatus, which is configured to perform a subtractive manufacturing on a processing target workpiece by irradiating a pulse energy beam onto a surface of the processing target workpiece, wherein
the data generation method comprises:
acquiring model information that is usable for predicting a predicted value of a processed amount at a first irradiation position and a predicted value of a processed amount at a position different from the first irradiation position, as a predicted value of a processed amount of the processing target workpiece in a case where the pulse energy beam is irradiated onto the first irradiation position of the plurality of irradiation positions for the unit number of pulses; and
generating, as the control data, target pulse number information, which indicates a target pulse number of the pulse energy beam that should be irradiated onto the plurality of irradiation positions of the processing target workpiece, based on the model information and a target shape information that is related to a target shape of the processing target workpiece after the subtractive manufacturing.

41. A data generation method that generates control data for controlling a processing apparatus, which is configured to perform a subtractive manufacturing on a processing target workpiece by irradiating a pulse energy beam onto a surface of the processing target workpiece, wherein
the data generation method comprises:
acquiring test processing condition information for processing a test workpiece so that its shape becomes a target shape;
measuring a test workpiece shape that is a shape of the test workpiece after processing the test workpiece based on the test processing condition information; and
calculating a processing condition of the processing target workpiece based on the test processing condition information, the test workpiece shape, and prediction information of a shape processed by the pulse energy beam.

42. A data generation method that generates control data for controlling a processing apparatus, which is configured to perform a subtractive manufacturing on a processing target workpiece by irradiating a pulse energy beam onto a surface of the processing target workpiece, wherein
the data generation method comprises:
generating first test processing condition information indicating a pulse number of the pulse energy beam that should be irradiated onto each of a plurality of irradiation positions of a first test workpiece;
acquiring first test shape information related to a shape of the first test workpiece on which the subtractive manufacturing has been performed by irradiating the pulse energy beam onto the first test workpiece based on the first test processing condition information;
generating second test processing condition information indicating a pulse number of the pulse energy beam that should be irradiated onto each of a plurality of irradiation positions of a second test workpiece to process the second test workpiece so that its shape becomes a target shape;
acquiring second test shape information related to a shape of the second test workpiece on which the subtractive manufacturing has been performed by irradiating the pulse energy beam onto the second test workpiece based on the second test processing condition information; and
calculating a target pulse number of the pulse energy beam, which should be irradiated onto a plurality of irradiation positions of the processing target workpiece, based on the first test shape information, the second test shape information, the second test processing condition, and the target shape.

43. A computer program that allows a computer to execute the data generation method according to any one of claims 1 to 42.

44. A recording medium on which the computer program according to claim 43 is recorded.

45. A processing apparatus that performs the subtractive manufacturing on the processing target workpiece by using the control data generated by the data generation method according to any one of claims 1 to 42.

46. The processing apparatus according to claim 45, comprising a control apparatus that generates the control data by performing the data generation method.
